(19) Europäisches Patentamt
European Patent Office
Office européen des brevets

(11) **EP 4 580 032 A1**

(12) **EUROPEAN PATENT APPLICATION**
published in accordance with Art. 153(4) EPC

(43) Date of publication:
**02.07.2025 Bulletin 2025/27**

(21) Application number: **22956440.6**

(22) Date of filing: **23.08.2022**

(51) International Patent Classification (IPC):
**H02M 7/49** *(2007.01)*     **H02M 7/48** *(2007.01)*

(52) Cooperative Patent Classification (CPC):
**H02M 7/48; H02M 7/49**

(86) International application number:
**PCT/JP2022/031724**

(87) International publication number:
**WO 2024/042612 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **HAMANAKA, Kota**
**Tokyo 100-8310 (JP)**

• **TANAKA, Miwako**
**Tokyo 100-8310 (JP)**
• **MUKUNOKI, Kaho**
**Tokyo 100-8310 (JP)**
• **FUJII, Toshiyuki**
**Tokyo 100-8310 (JP)**
• **KONO, Yoshiyuki**
**Tokyo 100-8310 (JP)**

(74) Representative: **Witte, Weller & Partner
Patentanwälte mbB
Postfach 10 54 62
70047 Stuttgart (DE)**

(54) **POWER CONVERSION DEVICE**

(57)     In a control device (3) of a power conversion device (1), in order to control an AC current outputted from a power converter (2), a first generator (23) generates a first voltage command value (Vd*, Vq*) based on a positive-phase current command value (Iqref, Idref) and a given reverse-phase current command value (Idnavr*, Iqnavr*). A second generator (27) generates a second voltage command value (Vz*) to suppress imbalance of voltages of power storage elements (7) among a plurality of arms (A1, A2, A3). A reverse-phase voltage compensator (21) generates the reverse-phase current command value to compensate for a reverse-phase component contained in an AC voltage of an AC power system (12). When a state in which imbalance is determined as being minor based on comparison of an assessment value relating to a degree of imbalance of the AC voltage of the AC power system with a threshold value continues for a certain time period or longer, the reverse-phase voltage compensator (21) generates the reverse-phase current command value and provides the reverse-phase current command value to the first generator (23).

FIG.4

**Description**

TECHNICAL FIELD

The present disclosure relates to a power conversion device.

BACKGROUND ART

A modular multilevel converter (MMC) in which a plurality of unit converters (which are referred to as "converter cells" below) are cascaded has been known as a large-capacity power conversion device provided in a power system. The MMC has, in each of three phases, a configuration in which a plurality of converter cells are cascaded and a reactor is further connected in series. The three-phase configuration is connected to an alternating-current (AC) power system with the reactor or a transformer being interposed.

Each converter cell includes a plurality of semiconductor switching elements and a power storage element (representatively, a capacitor). Each converter cell outputs a voltage across opposing ends of the capacitor and a zero voltage by turning on and turning off the semiconductor switching elements.

Since the MMC has a capacitor in each converter cell, voltages of capacitors may be imbalanced among the phases due to variation in voltage among the capacitors. When capacitor voltages become imbalanced among the phases, there is a concern about deterioration of control characteristics of the MMC due to generation or the like of an unintended circulating current. Therefore, it is important to control phase balance of the capacitor voltages for suppression of this imbalance (see, for example, WO2014/162620 (PTL 1)).

The AC power system interconnected to a power conversion device, on the other hand, may suffer from three-phase imbalance even in a steady state due to a difference in impedance characteristics of a power transmission line or a status of a load of each phase. A continued three-phase imbalanced state adversely affects a load device connected to the AC power system. In order to address this, a method of lessening imbalance of a system voltage by extracting an imbalance component (reverse-phase voltage) of the AC power system and feeding a current for compensation for the extracted imbalance component (reverse-phase voltage) under the control of the power conversion device has been known.

Rather than the MMC type power conversion device, for example, a voltage imbalance compensation device disclosed in Japanese Patent Laying-Open No. 06-113466 (PTL 2) detects a reverse-phase voltage from a three-phase phase voltage of the AC power system or a voltage across three-phase lines to compute a compensation current command value, and injects a compensation current into a system under pulse width modulation (PWM) control based on an output from a current regulator to compensate for voltage imbalance.

CITATION LIST

PATENT LITERATURE

> PTL 1: WO2014/162620
> PTL 2: Japanese Patent Laying-Open No. 06-113466

SUMMARY OF INVENTION

TECHNICAL PROBLEM

The inventors of the present application have studied lessening of imbalance of a system voltage by using an MMC type power conversion device to extract an imbalance component (reverse-phase voltage) of the AC power system and to feed a current for compensation for the extracted reverse-phase voltage to the AC power system. In a process of this study, the inventors of the present application have found that balance among the phases of the capacitor voltages of the MMC is greatly lost with increase in magnitude of a compensation current due to increase in reverse-phase voltage of the power system. In particular, on the occurrence of a system fault where the reverse-phase voltage becomes great, imbalance among the phases of the capacitor voltages is noticeable. Such a problem in connection with the MMC has not been known and is revealed for the first time by the present disclosure.

The present disclosure attempts to solve the problem above, and an object thereof is to provide an MMC type power conversion device to stabilize a system voltage by reverse-phase voltage compensation while preventing capacitor voltages from being imbalanced among phases.

SOLUTION TO PROBLEM

In one embodiment, a power conversion device connected to an AC power system is provided. This power conversion device includes a power converter including a plurality of arms and a control device to control this power converter. Each arm includes a plurality of cascaded converter cells. Each of the converter cells includes a pair of input and output terminals, a plurality of semiconductor switching elements, and a power storage element connected to the pair of input and output terminals with the plurality of semiconductor switching elements being interposed. The control device includes a first generator, a second generator, a gate signal generator, and a reverse-phase voltage compensator. The first generator generates a first voltage command value based on a positive-phase current command value and an inputted reverse-phase current command value for control of an AC current outputted from the power converter. The second generator generates a second voltage command value for suppression of imbalance of voltages of power storage elements among the plurality of arms. The gate signal generator generates a gate signal for control of on and off of the plurality of semiconductor switching elements in each converter cell based on the first voltage command value and the second voltage command value. The reverse-phase voltage compensator generates the reverse-phase current command value to compensate for a reverse-phase component contained in an AC voltage of the AC power system and outputs the reverse-phase current command value to the first generator when reverse-phase voltage compensation is performed. When a state in which imbalance of the AC voltage of the AC power system is determined as being minor based on comparison of an assessment value relating to a degree of imbalance with a threshold value continues for a certain time period or longer, the reverse-phase voltage compensator performs the reverse-phase voltage compensation.

ADVANTAGEOUS EFFECTS OF INVENTION

According to the embodiment, the reverse-phase voltage compensator performs reverse-phase voltage compensation when the state in which imbalance of the AC voltage of the AC power system is determined as being minor based on comparison of the assessment value relating to the degree of imbalance with the threshold value continues for a certain time period or longer. Therefore, the system voltage can be stabilized by reverse-phase voltage compensation while capacitor voltages are prevented from not being imbalanced among the phases.

BRIEF DESCRIPTION OF DRAWINGS

Fig. 1 is a schematic configuration diagram of a power conversion device 1 according to a first embodiment.
Fig. 2 is a circuit diagram showing a configuration of a half-bridge converter cell 6 (110).
Fig. 3 is a circuit diagram showing a configuration of a full-bridge converter cell 6 (110).
Fig. 4 is a block diagram showing a schematic configuration of a control device 3 in Fig. 1.
Fig. 5 is a block diagram showing an exemplary configuration of a reverse-phase voltage compensator 21 in Fig. 4.
Fig. 6 is a block diagram showing an exemplary configuration of a phase balance control unit 22 in Fig. 4.
Fig. 7 is a block diagram showing an exemplary configuration of a circulating current control unit 24 in Fig. 4.
Fig. 8 is a block diagram showing an exemplary configuration of an output current control unit 23 in Fig. 4.
Fig. 9 is a block diagram showing an exemplary configuration of a reverse-phase voltage compensator 21A in a power conversion device in a second embodiment.
Fig. 10 is a diagram showing a configuration of a power conversion device 100 according to a third embodiment.
Fig. 11 is a diagram for illustrating a current that flows through a power converter 101.
Fig. 12 is a block diagram showing a schematic configuration of a control device 107 in Fig. 1.
Fig. 13 is a block diagram showing an exemplary configuration of an all-voltage control unit 200 in Fig. 12.
Fig. 14 is a block diagram showing an exemplary configuration of a current control unit 300 in Fig. 12.
Fig. 15 is a block diagram showing an exemplary configuration of a phase balance control unit 500 in Fig. 12.
Fig. 16 is a block diagram showing an exemplary configuration of a positive/negative balance control unit 600 in Fig. 12.

DESCRIPTION OF EMBODIMENTS

Each embodiment will be described in detail below with reference to the drawings. The same or corresponding elements have the same reference characters allotted and description thereof may not be repeated.

First Embodiment.

(Schematic Configuration of Three-Phase Delta-Connected MMC Type Power Converter)

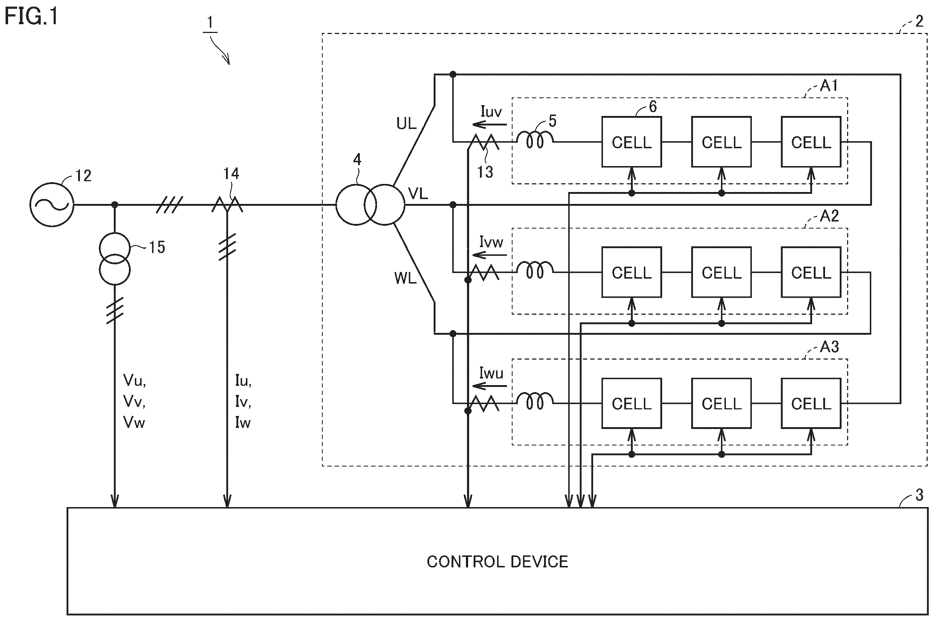

Fig. 1 is a schematic configuration diagram of a power conversion device 1 according to a first embodiment. Power conversion device 1 includes a delta-connected cascaded three-phase MMC type power converter 2 and a control device 3 therefor.

Power converter 2 includes a transformer 4 and three-phase AC lines UL, VL, and WL. A primary winding of transformer 4 is connected to power transmission lines of a U phase, a V phase, and a W phase of an AC power system 12. A secondary winding of transformer 4 is connected to first terminals of AC lines UL, VL, and WL.

Power converter 2 functions as a reactive power compensation device to inject or absorb reactive power into or from AC power system 12 with transformer 4 being interposed. Specifically, when a three-phase AC voltage (which is also referred to as a "system voltage" below) of AC power system 12 becomes low, power converter 2 injects reactive power into AC power system 12 to increase the system voltage. When the system voltage becomes high, on the other hand, power converter 2 absorbs reactive power from AC power system 12 to lower the system voltage. In other words, power converter 2 can compensate for reactive power by injection or absorption of a current orthogonal to the system voltage into or from AC power system 12.

Power converter 2 further includes arms A1 to A3. Arm A1 is connected between a second terminal of AC line UL of the U phase and a second terminal of AC line VL of the V phase. Arm A2 is connected between the second terminal of AC line VL of the V phase and a second terminal of AC line WL of the W phase. Arm A3 is connected between the second terminal of AC line WL of the W phase and the second terminal of AC line UL of the U phase. In other words, arms A1 to A3 are connected by delta connection.

Arms A1 to A3 may be connected by star connection. In this case, arm A1 is connected between the second terminal of AC line UL of the U phase and a common neutral point. Arm A2 is connected between the second terminal of AC line VL of the V phase and the common neutral point. Arm A3 is connected between the second terminal of AC line WL of the W phase and the common neutral point.

Each of arms A1 to A3 includes a reactor 5 and N (N being an integer equal to or larger than 2) converter cells 6. Therefore, power converter 2 includes 3N converter cells 6 in total. An example in Fig. 1 illustrates a case of N = 3. N converter cells 6 are connected in series. In order to suppress a circulating current that flows through delta connection, reactor 5 is connected in series to N converter cells 6 in each of arms (A1 to A3).

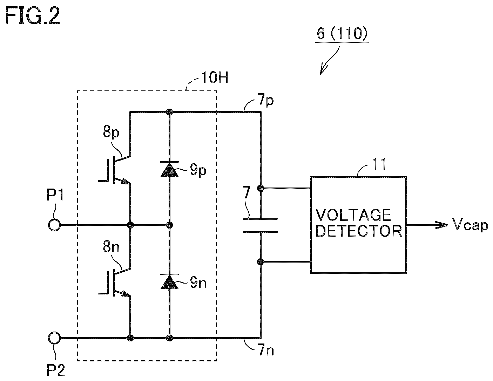

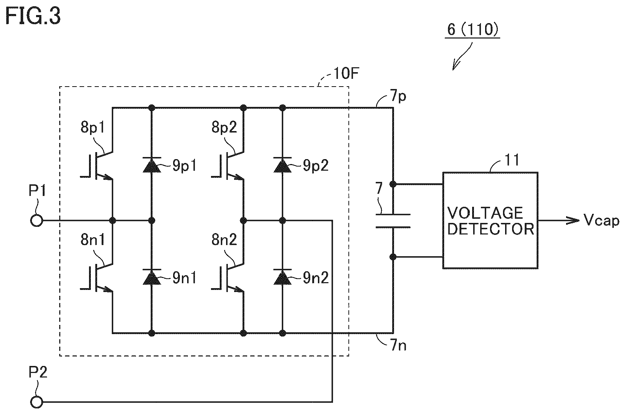

Each of the plurality of converter cells 6 bidirectionally converts electric power in accordance with a control signal from control device 3. An exemplary configuration of converter cell 6 will be described later with reference to Figs. 2 and 3.

Power conversion device 1 further includes an arm current detector 13 arranged in each of the arms (A1 to A3) and an AC current detector 14 and an AC voltage detector 15 arranged in AC power system 12.

Arm current detectors 13 detect a current Iuv that flows through arm A1, a current Ivw that flows through arm A2, and a current Iwu that flows through arm A3, respectively. AC current detector 14 detects a U-phase AC current Iu, a V-phase AC current Iv, and a W-phase AC current Iw in AC power system 12. AC voltage detector 15 detects a U-phase AC voltage Vu, a V-phase AC voltage Vv, and a W-phase AC voltage Vw of AC power system 12. Signals representing these detected currents and voltages are inputted to control device 3.

(Exemplary Configuration of Converter Cell 6)

An exemplary configuration of converter cell 6 will be described below with reference to Figs. 2 and 3. Fig. 2 shows an exemplary half-bridge configuration and Fig. 3 shows an exemplary full-bridge configuration. A configuration other than those in Figs. 2 and 3 may be applicable as the configuration of converter cell 6.

Fig. 2 is a circuit diagram showing a configuration of a half-bridge converter cell 6. Converter cell 6 in Fig. 2 includes a series body formed by connection in series of two semiconductor switching elements 8p and 8n, rectification elements 9p and 9n (typically diodes), a power storage element 7 (typically a capacitor), a voltage detector 11, input and output terminals P1 and P2, and voltage detector 11.

Rectification elements 9p and 9n are connected in anti-parallel (that is, in parallel and in a direction of reverse bias) to semiconductor switching elements 8p and 8n. The series body of semiconductor switching elements 8p and 8n and power storage element 7 are connected in parallel. Voltage detector 11 detects a voltage Vcap (which is also referred to as a capacitor voltage Vcap) across opposing ends of power storage element 7.

The series body of semiconductor switching elements 8p and 8n and rectification elements 9p and 9n implement a half-bridge circuit 10H. Opposing terminals of semiconductor switching element 8n are connected to input and output terminals P1 and P2, respectively. Therefore, power storage element 7 is connected to input and output terminals P1 and P2 with half-bridge circuit 10H being interposed.

Converter cell 6 outputs voltage Vcap of power storage element 7 or a zero voltage across input and output terminals P1 and P2 as a result of switching operations by semiconductor switching elements 8p and 8n. When semiconductor switching element 8p is turned on and semiconductor switching element 8n is turned off, converter cell 6 outputs voltage Vcap of power storage element 7. When semiconductor switching element 8p is turned off and semiconductor switching element 8n is turned on, converter cell 6 outputs the zero voltage.

Opposing terminals of semiconductor switching element 8p may be connected to input and output terminals P1 and P2, respectively. In this case again, as a result of on and off operations by semiconductor switching elements 8p and 8n, converter cell 6 outputs voltage Vcap of power storage element 7 and the zero voltage from input and output terminals P1 and P2.

Fig. 3 is a circuit diagram showing a configuration of a full-bridge converter cell 6. Converter cell 6 in Fig. 3 includes a first series body formed by connection in series of two semiconductor switching elements 8p1 and 8n1, a second series body formed by connection in series of two semiconductor switching elements 8p2 and 8n2, rectification elements 9p1, 9n1, 9p2, and 9n2, power storage element 7, voltage detector 11, and input and output terminals P1 and P2.

The first series body, the second series body, and power storage element 7 are connected in parallel. Rectification elements 9p1 and 9n1 are connected in anti-parallel to semiconductor switching elements 8p1 and 8n1, respectively. Rectification elements 9p2 and 9n2 are connected in anti-parallel to semiconductor switching elements 8p2 and 8n2, respectively. Semiconductor switching elements 8p1, 8n1, 8p2, and 8n2 and rectification elements 9p1, 9n1, 9p2, and 9n2 implement a full-bridge circuit 10F. Voltage detector 11 detects voltage Vcap across opposing ends of power storage element 7.

A point intermediate between semiconductor switching element 8p1 and semiconductor switching element 8n1 is connected to input and output terminal P1. Similarly, a point intermediate between semiconductor switching element 8p2 and semiconductor switching element 8n2 is connected to input and output terminal P2. Therefore, power storage element 7 is connected to input and output terminals P1 and P2 with full-bridge circuit 10F being interposed. Converter cell 6 outputs voltage Vcap or -Vcap of power storage element 7 or the zero voltage across input and output terminals P1 and P2 as a result of the switching operations by semiconductor switching elements 8p1, 8n1, 8p2, and 8n2.

In Figs. 2 and 3, semiconductor switching elements 8p, 8n, 8p1, 8n1, 8p2, and 8n2 are each implemented, for example, by a self-extinguishing semiconductor switching element such as an insulated gate bipolar transistor (IGBT) or a gate commutated turn-off (GCT) thyristor.

In the description below, when the semiconductor switching elements are collectively referred to or any one of them is referred to, denotation as semiconductor switching element 8 is given. When the rectification elements are collectively referred to or any one of them is referred to, denotation as rectification element 9 is given.

As shown in Fig. 1, converter cells 6 are cascaded. Therefore, in each of Figs. 2 and 3, input and output terminal P1 is connected to input and output terminal P2 of one of adjacent converter cells 6 or to the second terminal of one corresponding AC line. Input and output terminal P2 is connected to input and output terminal P1 of the other of adjacent converter cells 6 or the second terminal of the other corresponding AC line.

(Description of Overview of Control Device 3)

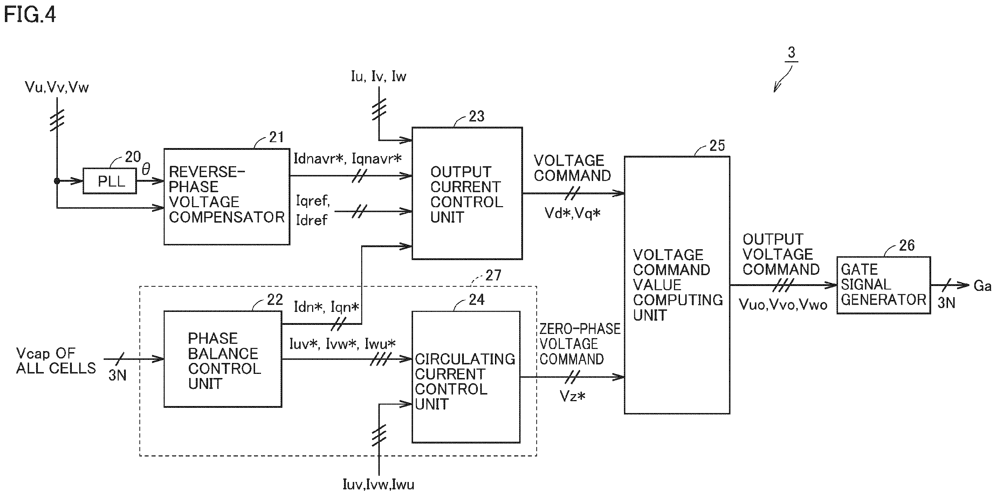

Fig. 4 is a block diagram showing a schematic configuration of control device 3 in Fig. 1. Control device 3 includes a phase locked loop (PLL) unit 20, a reverse-phase voltage compensator 21, a phase balance control unit 22, an output current control unit 23, a circulating current control unit 24, a voltage command value computing unit 25, and a gate signal generator 26. Overview of these constituent elements will be described below.

PLL unit 20 extracts a phase $\theta$ in synchronization with the system voltage from detection values of system voltages Vu, Vv, and Vw.

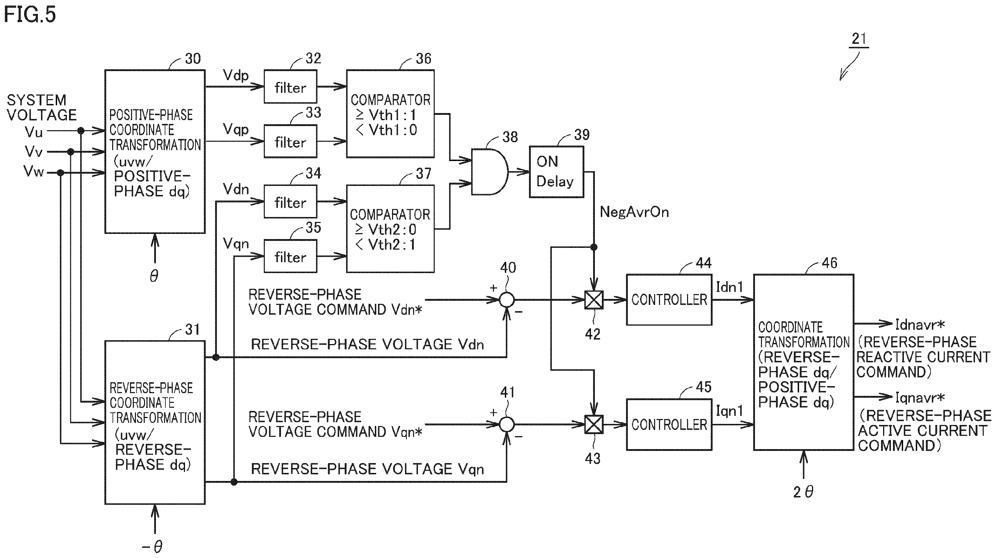

Reverse-phase voltage compensator 21 receives input of the detection values of system voltages Vu, Vv, and Vw and a reference phase $\theta$ outputted from the PLL unit. Reverse-phase voltage compensator 21 extracts a reverse-phase component (that is, a reverse-phase voltage) of the system voltage based on these inputs in performing reverse-phase voltage compensation and outputs reverse-phase current command values Idnavr* and Iqnavr* for compensation for the reverse-phase voltage. A more detailed configuration of reverse-phase voltage compensator 21 will be described later with reference to Fig. 5.

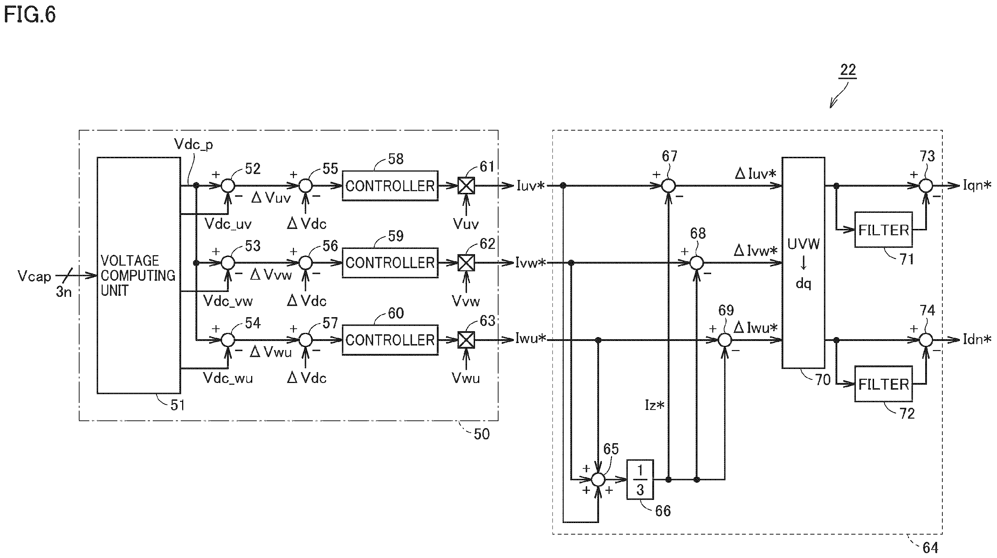

Phase balance control unit 22 receives input of detection values of capacitor voltages Vcap of all converter cells 6. Phase balance control unit 22 generates arm current command values Iuv*, Ivw*, and Iwu* for balancing of capacitor voltages Vcap of converter cells 6 among the phases. Furthermore, phase balance control unit 22 generates reverse-phase current command values Idnavr* and Iqnavr* by extracting a reverse-phase current component included in arm current command values Iuv*, Ivw*, and Iwu*. A more detailed configuration of phase balance control unit 22 will be described later with reference to Fig. 6.

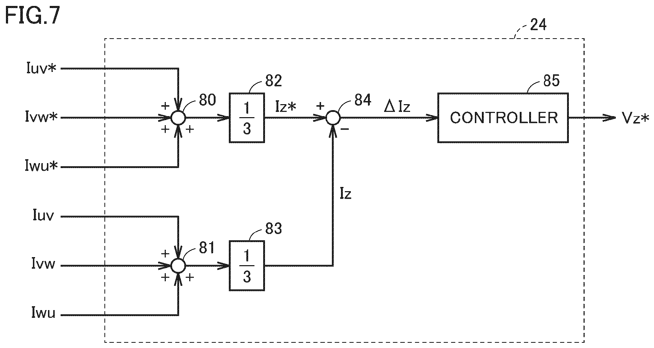

Circulating current control unit 24 generates a circulating current component for correction of arm currents Iuv, Ivw, and Iwu as a zero-phase voltage command value Vz* (which is also referred to as a second voltage command value) based on arm current command values Iuv*, Ivw*, and Iwu* inputted from phase balance control unit 22. A more detailed configuration of circulating current control unit 24 will be described later with reference to Fig. 7. Phase balance control unit 22 and circulating current control unit 24 implement a second generator 27 to generate second voltage command value Vz* for suppression of imbalance of voltages of power storage elements 7 among a plurality of arms 109.

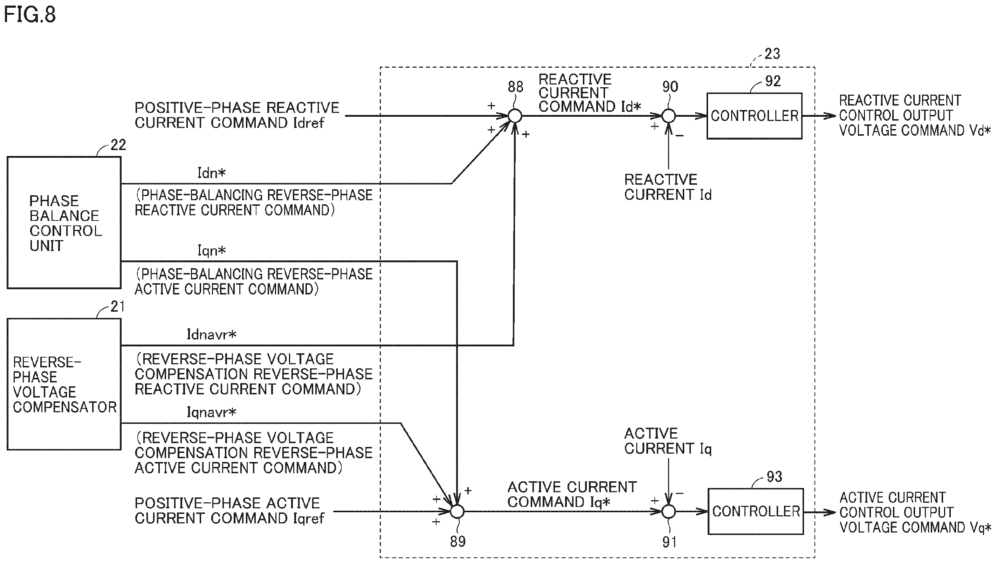

Output current control unit 23 (which is also referred to as a first generator) controls AC currents Iu, Iv, and Iw outputted from power converter 2. Output current control unit 23 receives input of reverse-phase current command values Idnavr* and Iqnavr* outputted from reverse-phase voltage compensator 21, reverse-phase current command values Idn* and Iqn* outputted from phase balance control unit 22, and detection values of currents Iu, Iv, and Iw of the AC system. Output current control unit 23 generates based on these inputs, voltage command values Vd* and Vq* (which are also referred to as a first voltage command value) for control of an output current from power converter 2. A more detailed configuration of output current control unit 23 will be described later with reference to Fig. 8.

Voltage command value computing unit 25 receives voltage command values Vd* and Vq* on dq axes outputted from output current control unit 23 and performs two-phase/three-phase change onto voltage command values Vd* and Vq* to thereby obtain AC voltage command values Vu*, Vv*, and Vw* of respective phases (the U phase, the V phase, and the W phase). Voltage command value computing unit 25 computes output voltage command values Vuo, Vvo, and Vwo by adding zero-phase voltage command value Vz* outputted from circulating current control unit 24 to obtained voltage command values Vu*, Vv*, and Vw* of the respective phases.

Gate signal generator 26 generates a gate signal Ga for control of on and off of each semiconductor switching element 8 in each converter cell 6 in each arm under pulse width modulation (PWM) control in accordance with output voltage command values Vuo, Vvo, and Vwo from voltage command value computing unit 25. Gate signal Ga from gate signal generator 26 is inputted to each semiconductor switching element 8 in each converter cell 6.

Reverse-phase voltage compensator 21, phase balance control unit 22, output current control unit 23, circulating current control unit 24, voltage command value computing unit 25, and gate signal generator 26 can be implemented based on at least one computer including at least one central processing unit (CPU) and at least one memory. Alternatively, at least a part of control device 3 can also be implemented by dedicated circuitry such as a programmable logic device (PLD) such as a field programmable gate array (FPGA) and an application specific integrated circuit (ASIC).

(Detailed Description of Reverse-Phase Voltage Compensator 21)

Fig. 5 is a block diagram showing an exemplary configuration of reverse-phase voltage compensator 21 in Fig. 4. Reverse-phase voltage compensator 21 includes a positive-phase coordinate transformation unit 30, a reverse-phase coordinate transformation unit 31, filters 32 to 35, comparators 36 and 37, an AND circuit 38, an on delay circuit 39, subtractors 40 and 41, multipliers 42 and 43, controllers 44 and 45, and a coordinate transformation unit 46. Operations by each constituent element of reverse-phase voltage compensator 21 will be described below with reference to Fig. 5.

Positive-phase coordinate transformation unit 30 of reverse-phase voltage compensator 21 receives input of detection values of system voltages Vu, Vv, and Vw. Positive-phase coordinate transformation unit 30 performs three-phase/two-phase conversion (UVW/$\alpha\beta$ conversion) of the detection values of system voltages Vu, Vv, and Vw from a UVW coordinate into an $\alpha\beta$ coordinate in accordance with an expression (1A). Positive-phase coordinate transformation unit 30 substitutes system voltages V$\alpha$ and V$\beta$ on the $\alpha\beta$ coordinate obtained by three-phase/two-phase conversion into an expression (1B) to perform rotation coordinate transformation ($\alpha\beta$/dq conversion) from the $\alpha\beta$ coordinate into the dq coordinate based on reference phase $\theta$ extracted by PLL unit 20. Positive-phase voltages Vdp and Vqp are thus obtained.

[Math. 1]

$$\begin{bmatrix} V\alpha \\ V\beta \\ Vz \end{bmatrix} = \frac{2}{3} \begin{bmatrix} 1 & -1/2 & -1/2 \\ 0 & \sqrt{3}/2 & -\sqrt{3}/2 \\ 1/2 & 1/2 & 1/2 \end{bmatrix} \begin{bmatrix} Vu \\ Vv \\ Vw \end{bmatrix} \qquad \cdots(1A)$$

$$\begin{bmatrix} Vdp \\ Vqp \end{bmatrix} = \begin{bmatrix} \cos\theta & \sin\theta \\ -\sin\theta & \cos\theta \end{bmatrix} \begin{bmatrix} V\alpha \\ V\beta \end{bmatrix} \qquad \cdots(1B)$$

In the present disclosure, a direction of a voltage vector is defined as a q axis, an active power component is represented by a q-axis component, and a reactive power component is represented by a d-axis component.

Reverse-phase coordinate transformation unit 31 receives input of the detection values of system voltages Vu, Vv, and Vw. Reverse-phase coordinate transformation unit 31 performs three-phase/two-phase conversion (UVW/$\alpha\beta$ conversion) of the detection values of system voltages Vu, Vv, and Vw from the UVW coordinate to the $\alpha\beta$ coordinate in accordance with the expression (1A). Reverse-phase coordinate transformation unit 31 substitutes system voltages V$\alpha$ and V$\beta$ on the $\alpha\beta$ coordinate obtained by three-phase/two-phase conversion into an expression (2) to perform rotation coordinate transformation ($\alpha\beta$/dq conversion) from the $\alpha\beta$ coordinate to the dq coordinate based on a reverse phase -$\theta$ of the reference phase. Reverse-phase voltages Vdn and Vqn are thus obtained.

[Math. 2]

$$\begin{bmatrix} Vdn \\ Vqn \end{bmatrix} = \begin{bmatrix} \cos(-\theta) & \sin(-\theta) \\ -\sin(-\theta) & \cos(-\theta) \end{bmatrix} \begin{bmatrix} V\alpha \\ V\beta \end{bmatrix} \qquad \cdots (2)$$

Positive-phase voltages Vdp and Vqp and reverse-phase voltages Vdn and Vqn obtained by computation above have a frequency component of 2f (f representing a system frequency). Therefore, filters 32 to 35 remove a 2f component.

Comparator 36 computes magnitude |Vp| of a positive-phase voltage in accordance with an expression (3) by using positive-phase voltages Vdp and Vqp from which the 2f frequency component has been removed by filters 32 and 33. Comparator 36 compares obtained magnitude |Vp| of the positive-phase voltage with a first threshold value Vth1, and outputs 1 when magnitude |Vp| of the positive-phase voltage is equal to or larger than first threshold value Vth1. Comparator 36 outputs 0 when magnitude |Vp| of the positive-phase voltage is smaller than first threshold value Vth1. Since comparator 36 is assumed to determine whether or not the system voltage has a value in a steady state, first threshold value Vth1 is a value, for example, equal to or larger than 0.9 pu.

[Math. 3]

$$|Vp| = \sqrt{Vdp^2 + Vqp^2} \qquad \cdots (3)$$

Comparator 37, on the other hand, computes magnitude |Vn| of a reverse-phase voltage in accordance with an expression (4) by using reverse-phase voltages Vdn and Vqn from which the 2f frequency component has been removed by filters 34 and 35. Comparator 37 compares obtained magnitude |Vn| of the reverse-phase voltage with a second threshold value Vth2, and outputs 1 when magnitude |Vn| of the reverse-phase voltage is equal to or smaller than second threshold value Vth2. Comparator 37 outputs 0 when magnitude |Vn| of the reverse-phase voltage is larger than second threshold value Vth2. Since comparator 37 is assumed to determine whether or not the system voltage has a value in the steady state, second threshold value Vth2 is a value, for example, equal to or smaller than 0.05 pu.

[Math. 4]

$$|Vn| = \sqrt{Vdn^2 + Vqn^2} \qquad \cdots (4)$$

When a time period set in on delay circuit 39 elapses while values inputted from comparators 36 and 37 to AND circuit 38 are both 1, a flag NegAvrOn for on/off switching of reverse-phase voltage compensation is set to 1. The time period set in on delay circuit 39 is set, for example, to a value equal to or larger than 0.1 [s] in order to avoid activation of reverse-phase voltage compensation at the time when a system imbalanced state instantaneously occurs.

According to the configuration above, when a state in which the system voltage is normal continues for a certain time period, flag NegAvrOn for on/off switching of reverse-phase voltage control is set to 1 and reverse-phase voltage compensation is activated. When imbalance in system voltage is great as in a system fault, on the other hand, reverse-phase voltage compensation is immediately deactivated.

Subtractor 40 of reverse-phase voltage compensator 21 computes a difference between reverse-phase voltage command value Vdn* (typically equal to 0) and reverse-phase voltage Vdn. Multiplier 42 multiplies a result of computation of this difference by a value of flag NegAvrOn. Therefore, when flag NegAvrOn is set to 1, controller 44 generates a reverse-phase voltage compensation current Idn1 by performing control computation to set the result of computation of the difference to zero, that is, to have reverse-phase voltage Vdn follow reverse-phase voltage command value Vdn*(= 0). A PI controller to add a result of execution of proportional computation (P) and integration computation (I) or another controller may be employed as controller 44.

Similarly, subtractor 41 computes a difference between reverse-phase voltage command value Vqn* (typically equal to 0) and reverse-phase voltage Vqn. Multiplier 43 multiplies a result of computation of this difference by the value of flag NegAvrOn. Therefore, when NegAvrOn is set to 1, PI controller 45 generates a reverse-phase voltage compensation current Iqn1 by performing control computation to set the result of computation of the difference to zero, that is, to have reverse-phase voltage Vqn follow reverse-phase voltage command value Vqn* (= 0). A PI controller or another controller may be employed as controller 45.

As set forth above, reverse-phase voltage compensator 21 performs reverse-phase voltage control on reverse-phase dq axes. Then, coordinate transformation unit (reverse-phase dq/positive-phase dq) 46 performs coordinate transformation of reverse-phase voltage compensation currents Idn1 and Iqn1 from the reverse-phase dq axes to the positive-phase dq axes by rotation coordinate transformation using a phase two times (that is $2\theta$) as large as reference phase $\theta$ extracted by PLL unit 20 as shown in an expression (5). Coordinate transformation unit 46 generates and outputs reverse-phase reactive current command value Idnavr* and reverse-phase active current command value Iqnavr* by this coordinate transformation.

[Math. 5]

$$\begin{bmatrix} \text{Idnavr} * \\ \text{Iqnavr} * \end{bmatrix} = \begin{bmatrix} \cos(2\theta) & \sin(2\theta) \\ -\sin(2\theta) & \cos(2\theta) \end{bmatrix} \begin{bmatrix} \text{Idn1} \\ \text{Iqn1} \end{bmatrix} \qquad \cdots (5)$$

(Detailed Description of Phase Balance Control Unit 22)

Fig. 6 is a block diagram showing an exemplary configuration of phase balance control unit 22 in Fig. 4. As shown in Fig. 6, phase balance control unit 22 includes an arm current command value generator 50 and a reverse-phase current command value generator 64. Arm current command value generator 50 generates arm current command values Iuv*, Ivw*, and Iwu* for balancing of capacitor voltages Vcap among the phases based on capacitor voltages Vcap of all converter cells 6. Reverse-phase current command value generator 64 generates reverse-phase current command values Idn* and Iqn* by extracting reverse-phase current components included in arm current command values Iuv*, Ivw*, and Iwu*.

More specifically, arm current command value generator 50 includes a voltage computing unit 51, subtractors 52 to 57, controllers 58 to 60, and multipliers 61 to 63. Reverse-phase current command value generator 64 includes an adder 65, a constant multiplier 66, subtractors 67 to 69, a coordinate transformation unit 70, filters 71 and 72, and subtractors 73 and 74. Operations by these constituent elements will be described below.

Voltage computing unit 51 computes an all-voltage representative value Vdc_p based on detection values from voltage detectors 11 arranged in converter cells 6. All-voltage representative value Vdc_p is a representative value of capacitor voltages Vcap of all converter cells 6 included in power converter 2. All-voltage representative value Vdc_p may be, for example, an average value or a median value of all capacitor voltages Vcap, and it is not particularly limited so long as it reflects magnitude of capacitor voltages Vcap of all converter cells 6. The representative value is also referred to as a value corresponding to the average value below.

Voltage computing unit 51 further computes a UV-phase voltage representative value Vdc_uv, a VW-phase voltage representative value Vdc_vw, and a WU-phase voltage representative value Vdc_wu. UV-phase voltage representative value Vdc_uv is a representative value of capacitor voltages Vcap of converter cells 6 included in arm A1. VW-phase voltage representative value Vdc_vw is a representative value of capacitor voltages Vcap of converter cells 6 included in arm A2. WU-phase voltage representative value Vdc_wu is a representative value of capacitor voltages Vcap of converter cells 6 included in arm A3. These representative values may each also be, for example, an average value or a median value of capacitor voltages Vcap of corresponding converter cells 6, and they are not particularly limited so long as they reflect magnitude of capacitor voltages Vcap of all corresponding converter cells 6.

Subtractor 52 calculates a difference ΔVuv between all-voltage representative value Vdc_p and UV-phase voltage representative value Vdc_uv. Subtractor 53 calculates a difference ΔVvw between all-voltage representative value Vdc_p and VW-phase voltage representative value Vdc_vw. Subtractor 54 calculates a difference ΔVwu between all-voltage representative value Vdc_p and WU-phase voltage representative value Vdc_wu.

Subtractor 55 subtracts a difference ΔVdc between DC voltage command value Vdc* and all-voltage representative value Vdc_p from difference ΔVuv. Subtractor 56 subtracts difference ΔVdc from difference ΔVvw. Subtractor 57 subtracts difference ΔVdc from difference ΔVwu. A zero-phase component which is a component common among the phases is removed from each of differences ΔVuv, ΔVvw, and ΔVwu.

Controller 58 performs feedback control computation to set difference ΔVuv-ΔVdc calculated by subtractor 55 to zero. Controller 58 may be a PI controller or another controller. Similarly, controller 59 performs feedback control computation to set difference ΔVvw-ΔVdc calculated by subtractor 56 to zero. Controller 60 performs feedback control computation to set difference ΔVwu-ΔVdc calculated by subtractor 57 to zero. Controllers 59 and 60 may each be a PI controller or another controller.

Multiplier 61 calculates a UV-phase arm current command value Iuv* by multiplying output from controller 58 by arm voltage Vuv. Multiplier 62 calculates a VW-phase arm current command value Ivw* by multiplying output from controller 59 by arm voltage Vvw. Multiplier 63 calculates a WU-phase arm current command value Iwu* by multiplying output from controller 60 by arm voltage Vwu. Arm current command value generator 50 outputs arm current command values Iuv*, Ivw*, and Iwu* generated as above to circulating current control unit 24.

An operation by reverse-phase current command value generator 64 will now be described. Adder 65 adds arm current command values Iuv*, Inw*, and Iwu* of the respective phases. Constant multiplier 66 obtains a zero-phase current command value Iz* by multiplying a result of addition by adder 65 by 1/3.

Subtractor 67 calculates a difference ΔIuv* by subtracting zero-phase current command value Iz* from UV-phase arm current command value Iuv*. Subtractor 68 calculates a difference ΔIvw* by subtracting zero-phase current command value Iz* from VW-phase arm current command value Ivw*. Subtractor 69 calculates a difference ΔIwu* by subtracting zero-phase current command value Iz* from WU-phase arm current command value Iwu*. The positive-phase component and the reverse-phase component are thus extracted from each of arm current command values Iuv*, Inw*, and Iwu* of the respective phases.

8

Coordinate transformation unit 70 performs three-phase/two-phase conversion of the extracted positive-phase component and reverse-phase component (that is, differences ΔIuv*, ΔInw*, and ΔIwu*) on the positive-phase coordinate system. Specifically, coordinate transformation unit 70 performs three-phase/two-phase conversion of differences ΔIuv*, ΔInw*, and ΔIwu* from the UVW coordinate to the αβ coordinate, and further performs rotation coordinate transformation from the αβ coordinate to the positive-phase dq coordinate by using reference phase θ.

Filters 71 and 72 extract the positive-phase component from output from coordinate transformation unit 70. Specifically, filters 71 and 72 are configured to remove the reverse-phase component from input values inputted thereto and to extract the positive-phase component. On the positive-phase coordinate system, the positive-phase component is a DC component and the reverse-phase component is a component (2f) having a frequency two times as high as a fundamental frequency. Therefore, a primary delay filter, a 2f moving average filter, a 2f notch filter, and the like are employed as filters 71 and 72.

Subtractor 73 generates reverse-phase active current command value Iqn* by subtracting output from filter 71 from output from coordinate transformation unit 70. Subtractor 74 generates reverse-phase reactive current command value Idn* by subtracting output from filter 72 from output from coordinate transformation unit 70. Reverse-phase current command value generator 64 outputs reverse-phase current command values Iqn* and Idn* generated as set forth above to output current control unit 23.

(Detailed Description of Circulating Current Control Unit 24)

Fig. 7 is a block diagram showing an exemplary configuration of circulating current control unit 24 in Fig. 4. As shown in Fig. 7, circulating current control unit 24 includes adders 80 and 81, constant multipliers 82 and 83, a subtractor 84, and a controller 85. Operations by these constituent elements will be described below.

Adder 80 adds arm current command values Iuv*, Ivw*, and Iwu* which are outputs from phase balance control unit 22. Constant multiplier 82 computes circulating current command value Iz* by multiplying output from adder 80 by 1/3.

Adder 81 adds arm current values Iuv, Ivw, and Iwu detected by arm current detector 13. Constant multiplier 83 computes a circulating current Iz by multiplying output from adder 81 by 1/3.

Subtractor 84 computes a difference ΔIz between circulating current command value Iz* and circulating current Iz. Controller 85 generates a zero-phase voltage command value vz* by performing control computation to set this difference ΔIz to zero, that is, to have circulating current Iz follow circulating current command value Iz*. Controller 85 may be a PI controller or another controller.

(Detailed Description of Output Current Control Unit 23)

Fig. 8 is a block diagram showing an exemplary configuration of output current control unit 23 in Fig. 4. As shown in Fig. 8, output current control unit 23 includes adders 88 and 89, subtractors 90 and 91, and controllers 92 and 93. Operations by these constituent elements will be described below.

Adder 88 generates a reactive current command value Id* by adding a positive-phase reactive current command value Idref, phase balancing reverse-phase reactive current command value Idn* outputted from phase balance control unit 22, and reverse-phase voltage compensation reverse-phase reactive current command value Idnavr* outputted from reverse-phase voltage compensator 21.

Subtractor 90 then calculates a difference between generated reactive current command value Id* and a reactive current Id based on detected currents Iu, Iv, and Iw of the AC system. Controller 92 generates reactive current control output voltage command value Vd* by performing control computation to set this difference to zero, that is, to have reactive current Id follow reactive current command value Id*. Controller 92 may be a PI controller or another controller.

Similarly, adder 89 generates an active current command value Iq* by adding a positive-phase active current command value Iqref, a phase balancing reverse-phase active current command value Iqn* outputted from phase balance control unit 22, and reverse-phase voltage compensation reverse-phase active current command value Iqnavr* outputted from reverse-phase voltage compensator 21.

Subtractor 91 then calculates a difference between generated active current command value Iq* and an active current Iq based on detected currents Iu, Iv, and Iw of the AC system. Controller 93 outputs active current control output voltage command value Vq* by performing control computation to set this difference to zero, that is, to have active current Iq follow active current command value Iq*. Controller 93 may be a PI controller or another controller.

Under the control above, output current control unit 23 (first generator) generates output voltage command values Vd* and Vq* (first voltage command value) in accordance with active power and reactive power outputted to AC power system 12.

(Effect of First Embodiment)

As described above, according to the first embodiment, reverse-phase voltage compensator 21 of the three-phase MMC delta-connected cascaded converter performs reverse-phase voltage compensation when a state in which imbalance is determined as being minor based on comparison of the assessment value relating to the degree of imbalance of AC voltages Vv, Vu, and Vw of AC power system 21 with the threshold value continues for a certain time period or longer. Reverse-phase voltage compensator 21 calculates magnitude of the positive-phase voltage and magnitude of the reverse-phase voltage as the specific assessment value, based on the AC voltage of AC power system 12. Reverse-phase voltage compensator 21 then performs reverse-phase voltage compensation when a state in which magnitude of the positive-phase voltage is equal to or larger than the first threshold value and magnitude of the reverse-phase voltage is smaller than the second threshold value continues for a certain time period or longer. Since reverse-phase voltage compensation can thus be activated in a steady state and reverse-phase voltage compensation can be deactivated on the occurrence of a system fault, the system voltage can be stabilized while imbalance of the capacitor voltages among the phases is prevented.

Second Embodiment.

In a power conversion device in a second embodiment, a configuration of a reverse-phase voltage compensator 21A is partially different from the configuration of reverse-phase voltage compensator 21 in Fig. 5 in the first embodiment.

Specifically, in the first embodiment, whether or not the state of AC power system 12 is normal is determined based on magnitude of the positive-phase component and magnitude of the reverse-phase component included in the system voltage. In the second embodiment, whether or not AC power system 12 is normal is determined based on differences ΔVuv, ΔVvw, and ΔVwu relating to capacitor voltage Vcap computed by phase balance control unit 22. Difference ΔVuv is the difference between all-voltage representative value Vdc_p and UV-phase voltage representative value Vdc_uv. Difference ΔVvw is a difference between all-voltage representative value Vdc_p and VW-phase voltage representative value Vdc_vw. Difference ΔVwu is a difference between all-voltage representative value Vdc_p and WU-phase voltage representative value Vdc_wu.

Since the power conversion device in the second embodiment is otherwise similar in configuration to that in the first embodiment, a difference from the first embodiment will be described below.

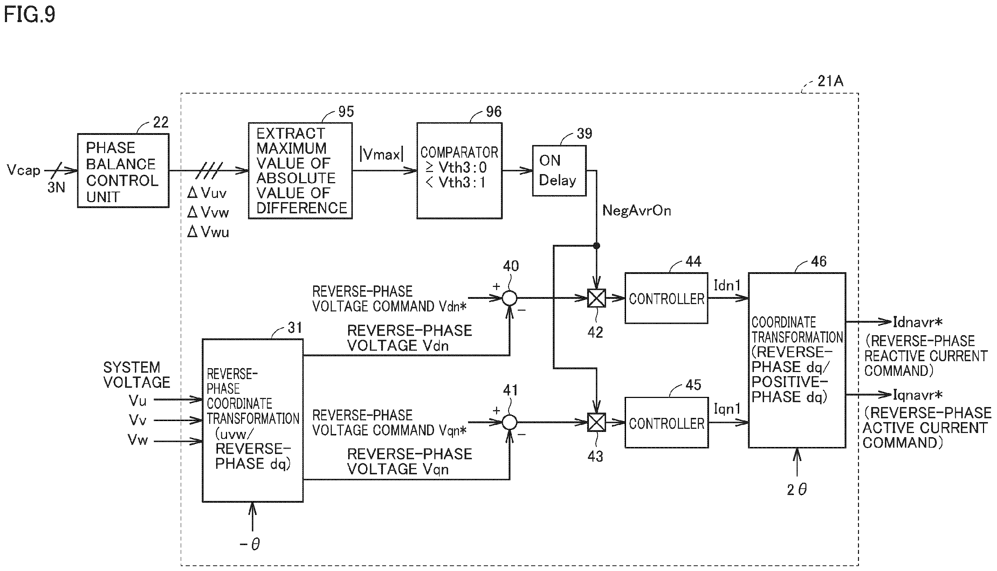

Fig. 9 is a block diagram showing an exemplary configuration of reverse-phase voltage compensator 21A in the power conversion device in the second embodiment. As shown in Fig. 9, reverse-phase voltage compensator 21A includes a maximum value computer 95, a comparator 96, on delay circuit 39, reverse-phase coordinate transformation unit 31, subtractors 40 and 41, multipliers 42 and 43, controllers 44 and 45, and coordinate transformation unit 46. Since components other than maximum value computer 95 and comparator 96 among the above constituent elements are the same as in Fig. 5, the same or corresponding elements have the same reference characters allotted and description will not be repeated.

Maximum value computer 95 extracts a maximum value |Vmax| of absolute values of differences ΔVuv, ΔVvw, and ΔVwu computed by phase balance control unit 22.

Comparator 96 compares maximum value |Vmax| with a third threshold value Vth3, and outputs 1 as flag NegAvrOn for on/off switching of reverse-phase voltage control when maximum value |Vmax| is smaller than third threshold value Vth3. Comparator 96 outputs 0 as flag NegAvrOn for on/off switching of reverse-phase voltage control when maximum value |Vmax| is equal to or larger than third threshold value Vth3.

As described with reference to Fig. 5, multipliers 42 and 43 multiply the differences between the reverse-phase voltage command values (Vdn* and Vqn*) and the reverse-phase voltages (Vdn and Vqn) by flag NegAvrOn for on/off switching of reverse-phase voltage control. Reverse-phase voltage control is thus activated only when balance among the phases of capacitor voltages Vcap is normal.

On delay circuit 39 sets flag NegAvrOn for on/off switching of reverse-phase voltage compensation to 1 when a state in which output from comparator 96 has changed from 0 to 1 continues until lapse of a set time period. For example, a value not smaller than 0.1 [s] is selected as the set time period for on delay circuit 39 in order to avoid reverse-phase voltage compensation at the time when the system imbalanced state instantaneously occurs.

In contrast, when output from comparator 36 changes from 1 to 0, that is, when an imbalance component becomes large to such an extent as being comparable to magnitude thereof on the occurrence of a system fault, on delay circuit 39 deactivates reverse-phase voltage compensation by immediately switching flag NegAvrOn for on/off switching of reverse-phase voltage control to 0.

Summarizing the above, when the steady state in which the imbalance component of the system voltage is relatively small continues for a certain time period, reverse-phase voltage control is activated by setting flag NegAvrOn for on/off switching of reverse-phase voltage control to 1. In contrast, when the imbalance component of the system voltage is relatively large as in the case of a system fault, reverse-phase voltage compensation is deactivated by immediately setting switching flag NegAvrOn to 0.

(Effect of Second Embodiment)

As described above, in the three-phase MMC delta-connected cascaded converter in the second embodiment, reverse-phase voltage compensator 21A calculates as the assessment value, a maximum value of the absolute values of the differences between all-voltage representative value Vdc_p of capacitor voltages Vcap of converter cells 6 and the voltage representative values (Vdc_uv, Vdc_vw, and Vdc_wu) of the respective phases. Reverse-phase voltage compensator 21A then performs reverse-phase voltage compensation when a state in which this assessment value is smaller than third threshold value Vth3 continues for a certain time period or longer. On the other hand, when the assessment value is equal to or larger than third threshold value Vth3, reverse-phase voltage compensator 21A immediately stops reverse-phase voltage compensation. Imbalance in capacitor voltage Vcap of power converter 2 among the phases is thus prevented and then the system voltage can be stabilized.

Third Embodiment.

In the first embodiment and the second embodiment, control of the power conversion device when the three-phase arms of power converter 2 are connected in parallel to the three phases of the AC power system, that is, when power converter 2 is used as a reactive power compensation device, is described. In a third embodiment, control of the power conversion device when a power system is configured by connection of power converter 2 between the AC power system and a DC line, that is, when power converter 2 is used as a bidirectional converter between AC power and DC power, will be described.

(Description of Three-Phase Y-Connected MMC Converter)

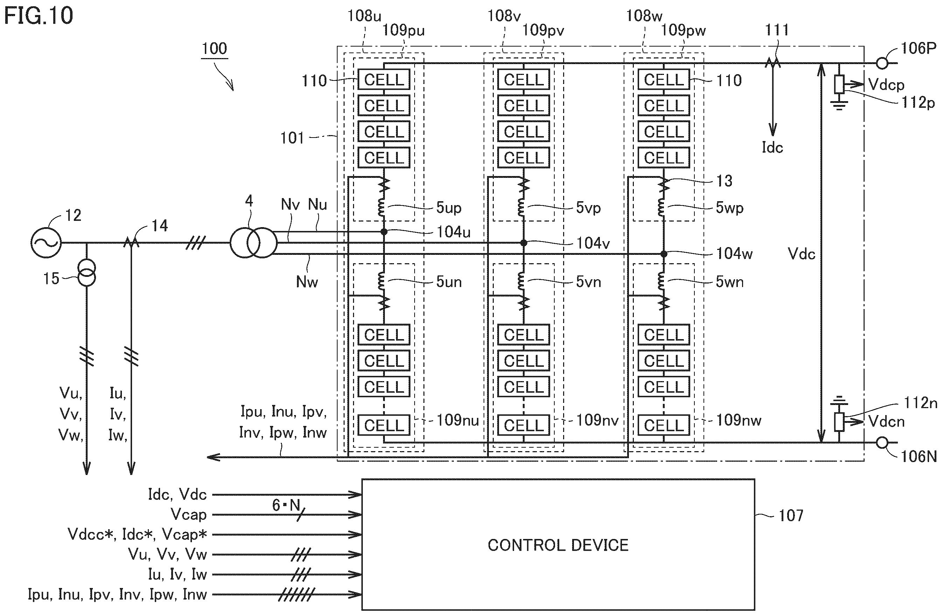

Fig. 10 is a diagram showing a configuration of a power conversion device 100 according to the third embodiment. As shown in Fig. 10, power conversion device 100 is connected between three-phase AC power system 12 and DC lines 106P and 106N. Power conversion device 100 includes a power converter 101 and a control device 107 therefor.

Power converter 101 has arms 109pu, 109pv, 109pw, 109nu, 109nv, and 109nw between AC ends Nu, Nv, and Nw and DC line 106P on a positive electrode side and between AC ends Nu, Nv, and Nv and DC line 106N on a negative electrode side, in the U phase, the V phase, and the W phase, respectively. AC ends Nu, Nv, and Nw are connected to AC power system 12 with interconnected transformer 4 being interposed. Instead of interconnected transformer 4, an interconnected reactor may be employed.

In the description below, when arms 109pu, 109pv, 109pw, 109nu, 109nv, and 109nw are collectively referred to or any one of them is referred to, denotation as an arm 109 is given. In each phase, an arm connected between the AC end and DC line 106P is referred to as a "positive-electrode-side arm 109p" or a "positive-side arm 109p" and an arm connected between the AC end and DC line 106N is referred to as a "negative-electrode-side arm 109n" or a "negative-side arm 109n."

A U-phase positive-side arm 109pu and a U-phase negative-side arm 109nu are collectively referred to as a U-phase leg circuit 108u. A V-phase positive-side arm 109pv and a V-phase negative-side arm 109nv are collectively referred to as a V-phase leg circuit 108v. A W-phase positive-side arm 109pw and a W-phase negative-side arm 109nw are collectively referred to as a W-phase leg circuit 108w. When U-phase leg circuit 108u, V-phase leg circuit 108v, and W-phase leg circuit 108w are collectively referred to or any one of them is referred to, denotation as a leg circuit 108 is given.

Each arm 109 includes N (N: a natural number equal to or larger than 2) converter cells 110 connected in series and an arm reactor (5up, 5vp, 5wp, 5un, 5vn, or 5wn) connected in series to N converter cells 110. The arm reactor may be provided in one of positive-electrode-side arm 109p and negative-electrode-side arm 109n of each phase.

Since each converter cell 110 is similar in configuration to converter cell 6 in power conversion device 1 according to the first embodiment described with reference to Figs. 2 and 3, description will not be repeated.

Power conversion device 100 further includes arm current detector 13 arranged in correspondence with each arm 109, capacitor voltage detector 11 arranged in each converter cell 110, a DC current detector 111 arranged in positive-electrode-side DC line 106P, a DC voltage detector 112p arranged in positive-electrode-side DC line 106P, and a DC voltage detector 112n arranged in negative-electrode-side DC line 106N.

Arm current detectors 13 detect arm currents Ipu and Inu that pass through positive-electrode-side and negative-electrode-side arms 109pu and 109nu of the U phase, arm currents Ipv and Inv that pass through positive-electrode-side and negative-electrode-side arms 109pv and 109nv of the V phase, and arm currents Ipw and Inw that pass through positive-electrode-side and negative-electrode-side arms 109pw and 109nw of the W phase, respectively. Detected arm currents Ipu, Inu, Ipv, Inv, Ipw, and Inw are inputted to control device 107 of power conversion device 100.

Capacitor voltage detector 11 detects a voltage (capacitor voltage Vcap) of power storage element 7 for each converter cell 110. A detection value of capacitor voltage Vcap is inputted to control device 107 of power conversion device 100.

DC current detector 111 detects DC current Idc that flows through positive-electrode-side DC line 106P.

DC voltage detector 112p detects a DC voltage Vdcp of positive-electrode-side DC line 106P. DC voltage detector 112n detects a DC voltage Vdcn of negative-electrode-side DC line 106N. A (1/2) multiple of a voltage difference between DC voltage Vdcp and DC voltage Vdcn is denoted as a DC voltage Vdcc below. DC voltage Vdcc, that is, a voltage command value Vdcc* of the DC voltage to be applied to each arm 109, is determined in advance as one of operating states of power conversion device 100.

Furthermore, power conversion device 100 includes AC voltage detector 15 and output current detector 14 (which is also referred to as AC current detector 14) arranged in AC power system 12, as in the first embodiment. Detection values of three-phase system AC voltages Vu, Vv, and Vw detected by AC voltage detector 15 and detection values of three-phase AC output currents Iu, Iv, and Iw of AC power system 12 detected by output current detector 14 are inputted to control device 107 of power conversion device 100.

(Current That Flows Through Power Converter 101)

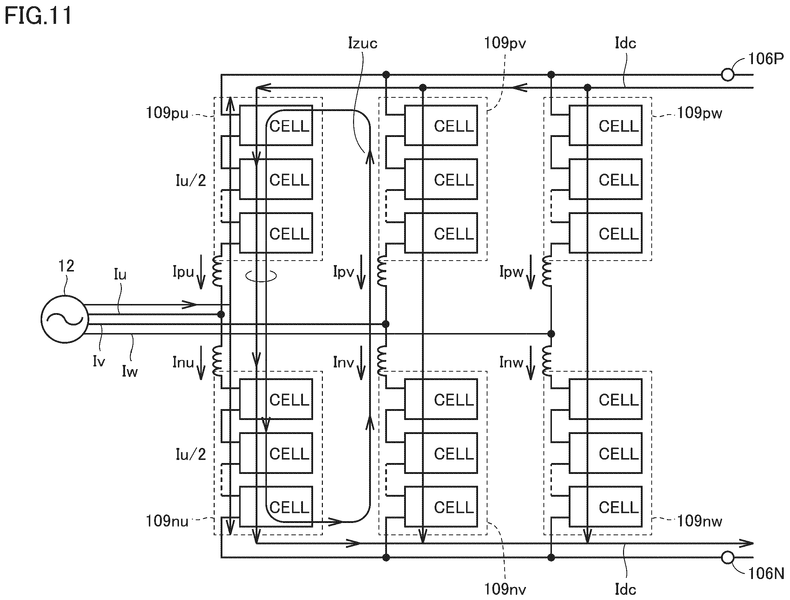

Before explanation of operations by control device 107 in the third embodiment is given, a current that flows through power converter 101 will be described with reference to Fig. 11.

Fig. 11 is a diagram for illustrating a current that flows through power converter 101. Each current element in Fig. 11 is as below.

(i) Ipu, Ipv, Ipw: Respective currents that flow through U-phase positive side arm 109pu, V-phase positive-side arm 109pv, and W-phase positive-side arm 109pw.

(ii) Inu, Inv, Inw: Respective currents that flow through U-phase negative-side arm 109nu, V-phase negative-side arm 109nv, and W-phase negative-side arm 109nw.

(iii) Iu: A U-phase AC current that goes through an AC system, and 1/2 of this AC current Iu is diverted to each of U-phase positive-side arm 109pu and U-phase negative-side arm 109nu.

(iv) Iv: A V-phase AC current that goes through the AC system, and 1/2 of this AC current Iv is diverted to each of V-phase positive-side arm 109pv and V-phase negative-side arm 109nv.

(v) Iw: A W-phase AC current that goes through the AC system, and 1/2 of this AC current Iw is diverted to each of W-phase positive-side arm 109pw and W-phase negative-side arm 109nw.

(vi) Idc: A current that goes through a DC system, and 1/3 of Idc flows to each of the U-phase arm, the V-phase arm, and the W-phase arm.

(vii) Izu: A current component obtained by excluding a current Iu/2 that goes through the AC power system from currents Ipu and Inu that flow through the U-phase arm, and relation in expressions (6A) and (6B) below holds.

[Math. 6]

$$Izu = Ipu + Iu/2 \qquad \cdots(6A)$$

$$Izu = Inu - Iu/2 \qquad \cdots(6B)$$

(viii) Izuc: A circulating current component that circulates among phases of leg circuits 108u, 108v, and 108w without going through the AC system and the DC system. Current component Izu is expressed in an expression (7A) below by deletion of current Iu from the expressions (6A) and (6B), and hence circulating current component Izuc is expressed in an expression (7B) below.

[Math. 7]

$$Izu = (Ipu + Inu) / 2 \qquad \cdots(7A)$$

$$Izuc = Izu - Idc / 3 \qquad \cdots(7B)$$

Similarly, though not shown, a current component obtained by excluding a current Iv/2 that goes through the AC power system from currents Ipv and Inv that flow through the V-phase arm is expressed as Izv and a current component obtained by excluding a current Iw/2 that goes through the AC power system from currents Ipw and Inw that flow through the W-phase arm is expressed as Izw. Current components Izv and Izw are expressed in expressions (8A) and (8B) below. Therefore, circulating current components Izvc and Izwc are expressed in an expression (8C) and an expression (8D)

below.

[Math. 8]

$$Izv = (Ipv + Inv) / 2 \qquad \cdots(8A)$$
$$Izw = (Ipw + Inw) / 2 \qquad \cdots(8B)$$
$$Izvc = Izv - Idc / 3 \qquad \cdots(8C)$$
$$Izwc = Izw - Idc / 3 \qquad \cdots(8D)$$

(Description of Overview of Control Device)

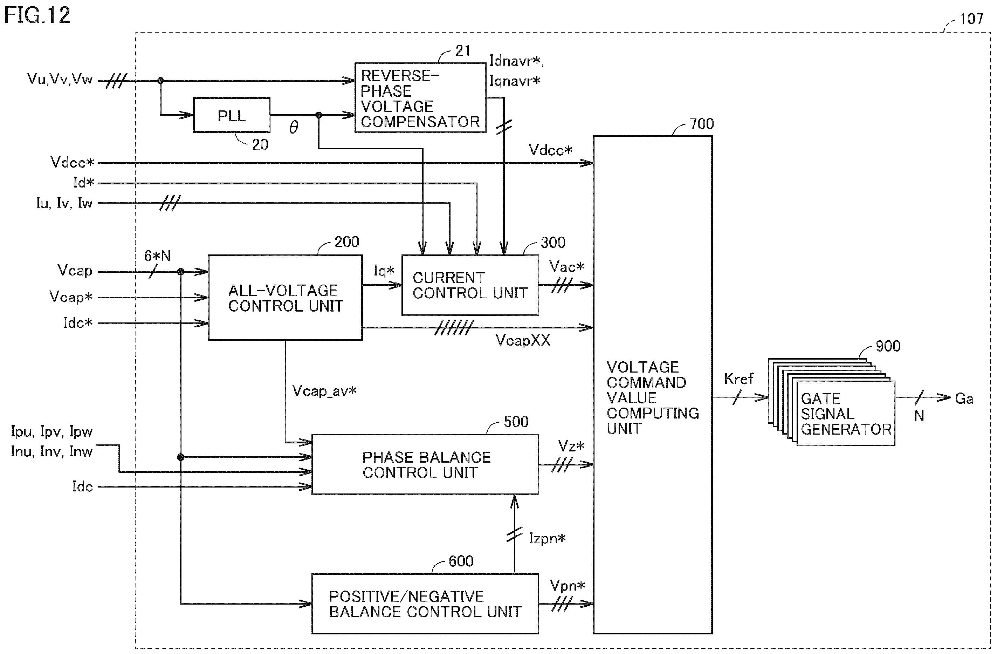

Fig. 12 is a block diagram showing a schematic configuration of control device 107 in Fig. 1. Control device 107 includes phase locked loop (PLL) unit 20, reverse-phase voltage compensator 21, an all-voltage control unit 200, a current control unit 300, a phase balance control unit 500 and a positive/negative balance control unit 600 to balance capacitor voltages Vcap of converter cells 110, a voltage command value computing unit 700, and a gate signal generator 900.

PLL unit 20 extracts phase θ in synchronization with a system voltage from detection values of system voltages Vu, Vv, and Vw. Operations by PLL unit 20 are the same as those in the first embodiment.

Reverse-phase voltage compensator 21 receives input of detection values of system voltages Vu, Vv, and Vw and phase θ outputted from PLL unit 20. When a period during which the system voltage is in the steady state and an imbalance component thereof is relatively small continues for a certain time period or longer, reverse-phase voltage compensator 21 outputs reverse-phase current command values Idnavr* and Iqnavr* for compensation for the reverse-phase voltage based on the inputs above. Since the detailed exemplary configuration and operations of reverse-phase voltage compensator 21 are similar to those in the case of the first embodiment described with reference to Figs. 4 and 5 and the case of the second embodiment described with reference to Fig. 9, detailed description will not be repeated.

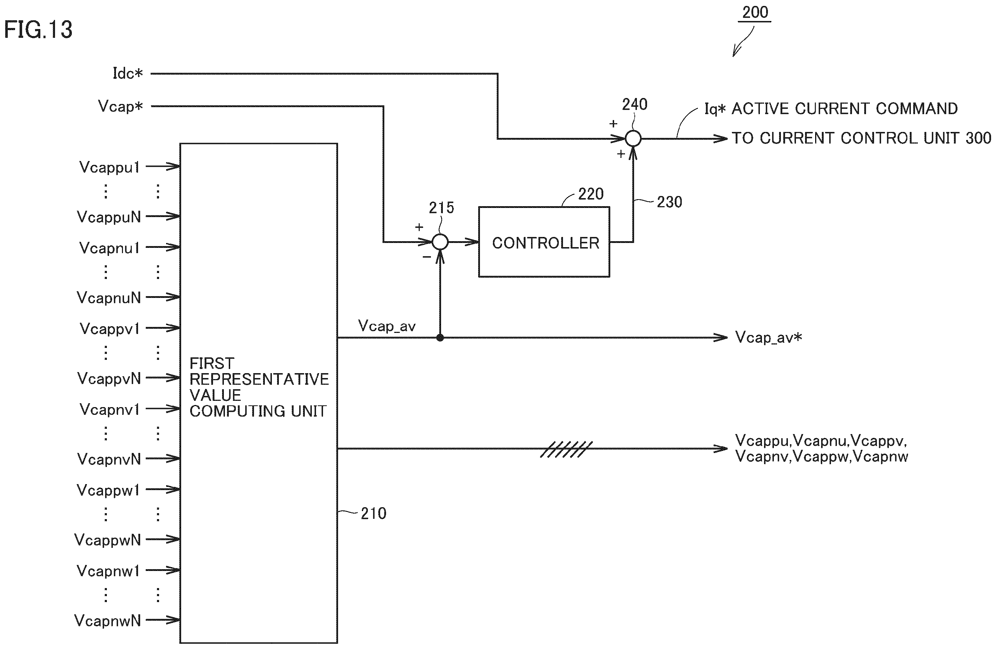

All-voltage control unit 200 receives input of detection values of capacitor voltages Vcap of all (that is, 6N converter cells in the all arms of the all phases, N being the number of converter cells in each arm) converter cells 110, capacitor voltage command value Vcap* (which is referred to as an all-voltage command value Vcap* below) for all converter cells 110, and DC current command value Idc*. All-voltage control unit 200 calculates a value Vcap_av comparable to an average value of capacitor voltages Vcap of all converter cells 110 and controls this value Vcap_av with a controller so as to have this value Vcap_av follow predetermined all-voltage command value Vcap*. Furthermore, all-voltage control unit 200 calculates active current command value Iq* by adding DC current command value Idc* to output from this controller. Since a difference between AC power and DC power in power converter 101 is active power common to all converter cells 110, capacitor voltages Vcap of all converter cells 110 are controlled based on active current Iq. Details of operations by all-voltage control unit 200 will be described later with reference to Fig. 13.

Current control unit 300 (which is also referred to as the first generator) controls AC currents Iu, Iv, and Iw outputted from power converter 101. Specifically, current control unit 300 receives input of phase θ in synchronization with the AC system voltage extracted by PLL unit 20, detection values of currents Iu, Iv, and Iw from AC power system 12 detected by AC current detector 14, active current command value Iq* generated by all-voltage control unit 200, reactive current command value Id* determined by an operation condition of power conversion device 100, and reverse-phase active current command value Iqnavr* and reverse-phase reactive current command value Idnavr* generated by reverse-phase voltage compensator 21. Active current command value Iq* and reactive current command value Id* are also collectively referred to as positive-phase current command values Id* and Iq*.

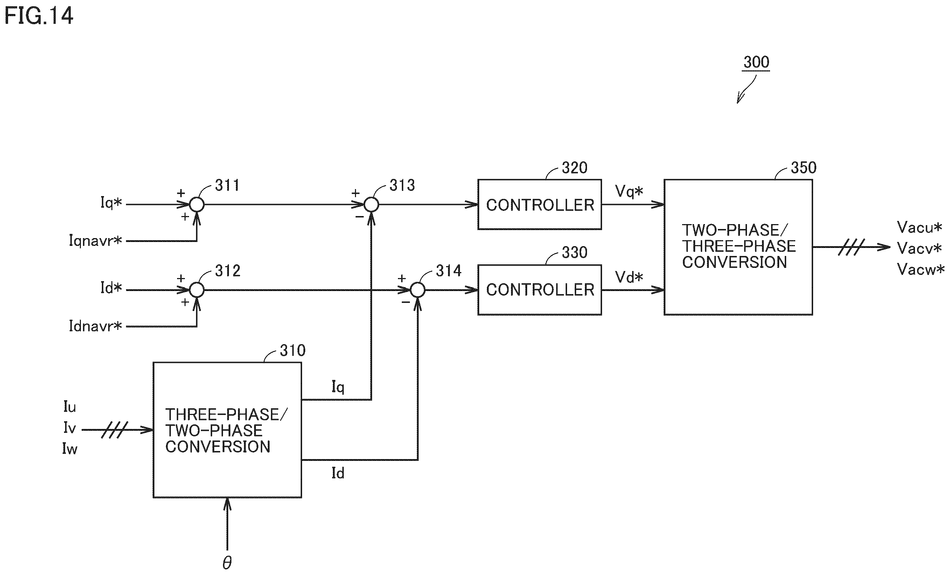

Current control unit 300 generates a U-phase AC voltage command value Vacu*, a V-phase AC voltage command value Vacv*, and a W-phase AC voltage command value Vacw* (which are denoted as an AC voltage command value Vac* and also referred to as a first voltage command value when they are collectively referred to) by controlling active current Iq and reactive current Id based on currents Iu, Iv, and Iw from AC power system 12 based on active current command value Iq*, reactive current command value Id*, reverse-phase active current command value Iqnavr*, and reverse-phase reactive current command value Idnavr*. Details of operations by current control unit 300 will be described later with reference to Fig. 14.

Phase balance control unit 500 (which is also referred to as the second generator) receives input of capacitor voltages Vcap of all (that is, 6N converter cells, with the number of converter cells in each arm being denoted as N) converter cells 110, arm currents Ipu, Inu, Ipv, Inv, Ipw, and Inw detected by arm current detector 13, DC current Idc detected by DC current detector 111, a value (a first representative value) Vcap_av* comparable to an average value of all capacitor voltages outputted from all-voltage control unit 200, and a positive/negative balancing circulating current command value Izpn* (Izpna* and Izpnb) outputted from positive/negative balance control unit 600 which will be described later.

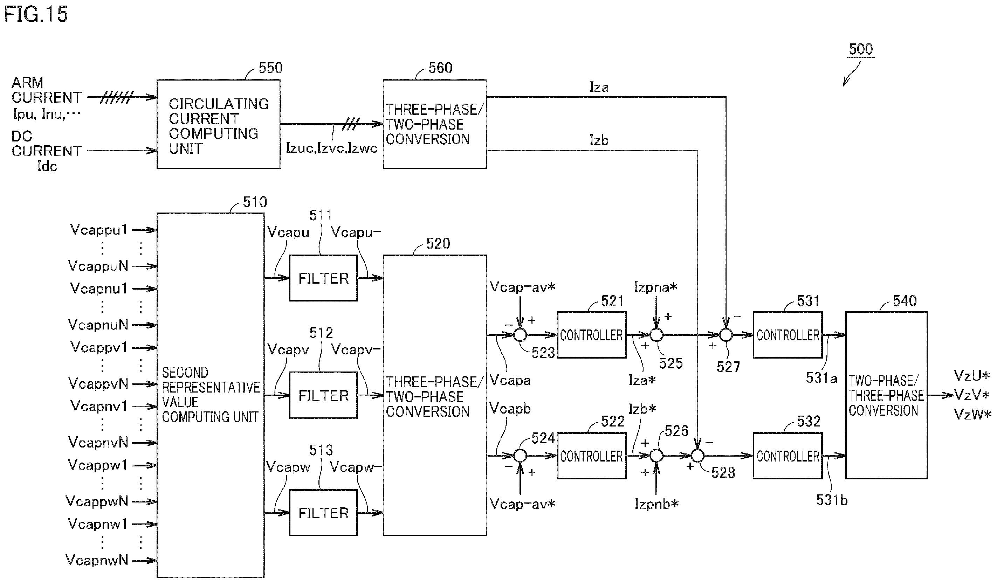

Phase balance control unit 500 generates circulating current control voltage command values VzU*, VzV*, and VzW* of the U phase, the V phase, and the W phase (which are denoted as Vz* and also referred to as a second voltage command value when they are collectively referred to) by controlling based on these inputs, values Vcapu, Vcapv, and Vcapw comparable to the average values of the capacitor voltages of the respective phases (the U phase, the V phase, and the W phase) so as to have the values follow value Vcap_av* comparable to the average value of the all capacitor voltages outputted from all-voltage control unit 200. Details of operations by phase balance control unit 500 will be described later with reference to Fig. 15.

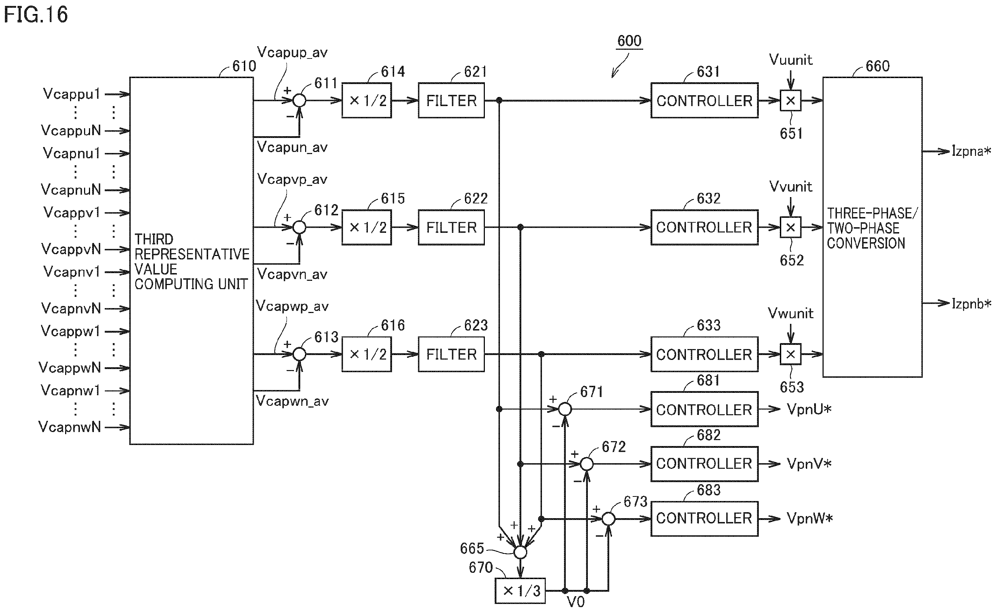

Positive/negative balance control unit 600 (which is also referred to as a third generator) receives input of detection values of capacitor voltages Vcap of all converter cells 110. Positive/negative balance control unit 600 controls based on these inputs, capacitor voltages Vcap of positive-side arm 109p and capacitor voltages Vcap of negative-side arm 109n to be balanced in the leg circuits (108u, 108v, and 108w) of the respective phases. Positive/negative balance control unit 600 then generates circulating current command value Izpn* (Izpna* and Izpnb) for this positive/negative balance control and outputs the circulating current command value to phase balance control unit 500. Positive/negative balance control unit 600 further generates a positive/negative balance control AC voltage command value Vpn* (VpnU*, VpnV*, and VpnW*, which are also referred to as a third voltage command value) and outputs the AC voltage command value to voltage command value computing unit 700. Details of operations by positive/negative balance control unit 600 will be described later with reference to Fig. 16.

Voltage command value computing unit 700 receives input of predetermined DC voltage command value Vdcc*, first voltage command value Vac* (Vacu*, Vacv*, and Vacw*) outputted from current control unit 300 (the first generator), second voltage command value Vz* (VzU*, VzV*, and VzW*) for circulating current control outputted from phase balance control unit 500 (the second generator), and third voltage command value Vpn* (VpnU*, VpnV*, and VpnW*) for positive/negative balance outputted from positive/negative balance control unit 600 (the third generator). DC voltage command value Vdcc* is a voltage command value comparable to 1/2 time as high as voltage Vdc across DC terminals.

Voltage command value computing unit 700 generates a voltage command value Vref for each arm 109 by allocating these voltage command values. Furthermore, voltage command value computing unit 700 generates an arm modulation command value Kref for each arm 109 by dividing voltage command value Vref for each arm 109 by a total value VcapXX of capacitor voltages of arms 109 inputted from all-voltage control unit 200. Voltage command value computing unit 700 outputs arm modulation command value Kref for each arm 109 to each of N gate signal generators 900 in corresponding arms 109.

N gate signal generators 900 are provided in correspondence with N respective converter cells 110 in each arm 109. Each gate signal generator 900 outputs gate signal Ga for control of on and off of semiconductor switching element 8 provided in corresponding converter cell 110 based on arm modulation command value Kref.

Reverse-phase voltage compensator 21, all-voltage control unit 200, current control unit 300, phase balance control unit 500, positive/negative balance control unit 600, voltage command value computing unit 700, and gate signal generator 900 can be configured based on at least one computer including at least one CPU and at least one memory. Alternatively, at least a part of control device 107 can also be configured with a PLD such as an FPGA and dedicated circuitry such as an ASIC.

(Detailed Description of All-Voltage Control Unit 200)

Fig. 13 is a block diagram showing an exemplary configuration of all-voltage control unit 200 in Fig. 12. As shown in Fig. 13, all-voltage control unit 200 includes a first representative value computing unit 210, a subtractor 215, a controller 220, an adder 225, and an adder 240. Operations by each constituent element will be described below.

First representative value computing unit 210 receives input of capacitor voltages Vcap of all (that is, 6N converter cells in the all arms of the all phases, N being the number of converter cells in each arm) converter cells 110. First representative value computing unit 210 then computes value Vcap_av comparable to the average value of capacitor voltages Vcap of all converter cells 110. Value Vcap_av comparable to the average value should only be a value that represents capacitor voltages Vcap of all converter cells 110. It may be, for example, the average value or a median value of capacitor voltages Vcap of all converter cells 110, and it is not particularly limited so long as it reflects magnitude of capacitor voltages Vcap of all converter cells 6. Value Vcap_av comparable to the average value of capacitor voltages Vcap of the all converter cells may be a value filtered to suppress abrupt fluctuation.

When the capacitor voltages of all converter cells 110 are collectively referred to or any one of them is referred to, denotation as Vcap is given. When individual capacitor voltages are expressed, as shown in Fig. 13, N capacitor voltages in the U-phase positive-side arm are denoted as Vcappu1, ..., VcappuN, N capacitor voltages in the U-phase negative-side arm are denoted as Vcapnu1, ..., VcapnuN, N capacitor voltages in the V-phase positive-side arm are denoted as Vcappv1, ..., VcappvN, N capacitor voltages in the V-phase negative-side arm are denoted as Vcapnv1, ..., VcapnvN, N capacitor voltages in the W-phase positive-side arm are denoted as Vcappw1, ..., VcappwN, and capacitor voltages in the W-phase negative-side arm are denoted as Vcapnw1, ..., VcapnwN. As shown in Fig. 12, when a total value of capacitor voltages Vcap is collectively referred to, denotation as VcapXX is given.

First representative value computing unit 210 further computes a total value Vcappu of capacitor voltages Vcap of converter cells 110 in U-phase positive-side arm 109pu, a total value Vcapnu of capacitor voltages Vcap of converter cells 110 in U-phase negative-side arm 109nu, a total value Vcappv of capacitor voltages Vcap of converter cells 110 in V-phase positive-side arm 109pv, a total value Vcapnv of capacitor voltages Vcap of converter cells 110 in V-phase negative-side arm 109nv, a total value Vcappw of capacitor voltages Vcap of converter cells 110 in W-phase positive-side arm 109pw, and a total value Vcapnw of capacitor voltages Vcap of converter cells 110 in W-phase negative-side arm 109nw.

Subtractor 215 computes a difference between capacitor voltage command value Vcap* (which is referred to as all-voltage command value Vcap*) for all converter cells 110 and value Vcap_av comparable to the average value of capacitor voltages Vcap of all converter cells 110.

Controller 220 performs feedback computation to set the difference between value Vcap_av comparable to the average value of the capacitor voltages of all converter cells 110 and all-voltage command value Vcap* to zero, that is, to have the value of value Vcap_av comparable to the average value of all capacitor voltages follow all-voltage command value Vcap*. Controller 220 may be a PI controller or another controller.

Adder 225 generates active current command value Iq* by adding DC current command value Idc* or a detection value of DC current Idc detected by DC current detector 111 to an operation amount 230 outputted from controller 220.

All-voltage control unit 200 outputs generated active current command value Iq* to current control unit 300. Furthermore, all-voltage control unit 200 outputs as first representative value Vcap_av*, value Vcap_av comparable to the average value of all capacitor voltages generated by first representative value computing unit 210 to phase balance control unit 500. Furthermore, all-voltage control unit 200 outputs a total value (Vcappu, Vcapnu, Vcappv, Vcapnv, Vcappw, or Vcapnw) of capacitor voltages Vcap for each arm generated by first representative value computing unit 210 to voltage command value computing unit 700.

(Detailed Description of Current Control Unit 300)

Fig. 14 is a block diagram showing an exemplary configuration of current control unit 300 in Fig. 12. As shown in Fig. 14, current control unit 300 includes a three-phase/two-phase converter 310, adders 311 and 312, subtractors 313 and 314, controllers 320 and 330, and a two-phase/three-phase converter 350. Operations by each constituent elements will be described below.

Three-phase/two-phase converter 310 generates active current Iq and reactive current Id by three-phase/two-phase conversion of detection values of currents Iu, Iv, and Iw of the AC system in accordance with an expression (9) below, based on phase $\theta$ in synchronization with the AC system voltage. Conversion in the expression (9) is obtained by conversion of currents Iu, Iv, and Iw into currents I$\alpha$ and I$\beta$ on the $\alpha\beta$ coordinate by three-phase/two-phase conversion and conversion from currents I$\alpha$ and I$\beta$ on the $\alpha\beta$ coordinate into currents Id and Iq on the dq coordinate by rotation coordinate transformation based on reference phase $\theta$.

[Math. 9]

$$\begin{bmatrix} Id \\ Iq \end{bmatrix} = \frac{2}{3}\begin{bmatrix} \cos\theta & \sin\theta \\ -\sin\theta & \cos\theta \end{bmatrix}\begin{bmatrix} 1 & -1/2 & -1/2 \\ 0 & \sqrt{3}/2 & -\sqrt{3}/2 \end{bmatrix}\begin{bmatrix} Iu \\ Iv \\ Iw \end{bmatrix}$$

$$= \frac{2}{3}\begin{bmatrix} \cos(\theta) & \cos(\theta - 2\pi/3) & \cos(\theta - 4\pi/3) \\ -\sin(\theta) & -\sin(\theta - 2\pi/3) & -\sin(\theta - 4\pi/3) \end{bmatrix}\begin{bmatrix} Iu \\ Iv \\ Iw \end{bmatrix} \qquad \cdots(9)$$

Adder 311 adds active current command value Iq* generated by all-voltage control unit 200 and reverse-phase active current command value Iqnavr* generated by reverse-phase voltage compensator 21. Subtractor 313 calculates a difference between a result of addition by adder 311 and active current Iq generated by three-phase/two-phase converter 310. Controller 320 performs feedback computation to set a result of computation of the difference by subtractor 313 to zero, that is, to have active current Iq follow the value obtained by addition of active current command value Iq* and reverse-phase active current command value Iqnavr*. Controller 320 may be a PI controller or another controller.

Similarly, adder 312 adds reactive current command value Id* determined by an operation condition of power conversion device 100 and reverse-phase reactive current command value Idnavr* generated by reverse-phase voltage compensator 21 generated by reverse-phase voltage compensator 21. Subtractor 314 calculates a difference between a result of addition by adder 312 and reactive current Id generated by three-phase/two-phase converter 310. Controller 330 performs feedback computation to set a result of computation of the difference by subtractor 314 to zero, that is, to have reactive current Id follow the value calculated by addition of reactive current command value Id* and reverse-phase reactive current command value Idnavr*. Controller 330 may be a PI controller or another controller.

Controllers 320 and 330 output as amounts of operation, active voltage command value Vq* and reactive voltage command value Vd* on the dq axes, respectively.

Two-phase/three-phase converter 350 then converts voltage command values Vd* and Vq* on the dq axes into AC voltage command values Vacu*, Vacv*, and Vacw* of the three phases (the U phase, the V phase, and the W phase), in accordance with an expression (10) below. The expression (10) is obtained by inverse conversion of three-phase/two-phase conversion in the expression (9). Two-phase/three-phase converter 350 outputs generated AC voltage command value Vac* (Vacu*, Vacv*, and Vacw*) to voltage command value computing unit 700.
[Math. 10]

$$\begin{bmatrix} Vacu* \\ Vacv* \\ Vacw* \end{bmatrix} = \begin{bmatrix} 1 & 0 \\ -1/2 & \sqrt{3}/2 \\ -1/2 & -\sqrt{3}/2 \end{bmatrix} \begin{bmatrix} \cos\theta & -\sin\theta \\ \sin\theta & \cos\theta \end{bmatrix} \begin{bmatrix} Vd* \\ Vq* \end{bmatrix} \quad \cdots(10)$$

(Detailed Description of Phase Balance Control Unit 500)

Fig. 15 is a block diagram showing an exemplary configuration of phase balance control unit 500 in Fig. 12. As shown in Fig. 15, phase balance control unit 500 includes a second representative value computing unit 510, filters 511, 512, and 513, a three-phase/two-phase converter 520, subtractors 523 and 524, controllers 521 and 522, adders 525 and 526, subtractors 527 and 528, controllers 531 and 532, a two-phase/three-phase converter 540, a circulating current computing unit 550, and a three-phase/two-phase converter 560. Operations by each constituent element will be described below.

Second representative value computing unit 510 computes a value Vcapu comparable to an average value of capacitor voltages of all converter cells 110 in U-phase leg circuit 108u, a value Vcapv comparable to an average value of capacitor voltages of all converter cells 110 in V-phase leg circuit 108v, and a value Vcapw comparable to an average value of capacitor voltages of all converter cells 110 in W-phase leg circuit 108w.

Values Vcapu, Vcapv, and Vcapw comparable to the average values of the capacitor voltages of the respective phases include components that oscillate at a frequency twice as high as a system frequency. Therefore, filters 511, 512, and 513 remove the frequency component twice as high as the system frequency from values Vcapu, Vcapv, and Vcapw comparable to the average values of the capacitor voltages of the respective corresponding phases. Values comparable to the average values of the capacitor voltages that have passed through filters 511, 512, and 513 are denoted as Vcapu-, Vcapv-, and Vcapw-, respectively. A moving average filter, a notch filter, or the like adapted to a frequency twice as high as the system frequency is applicable as filters 511, 512, and 513.

Three-phase/two-phase converter 520 generates control values Vcapa and Vcapb by subjecting values Vcapu-, Vcapv-, and Vcapw- comparable to the average values of the capacitor voltages that have passed through respective filters 511, 512, and 513 to three-phase/two-phase conversion in accordance with an expression (11) below.
[Math. 11]

$$\begin{bmatrix} Vcapa \\ Vcapb \end{bmatrix} = \begin{bmatrix} 1 & -1/2 & -1/2 \\ 0 & \sqrt{3}/2 & -\sqrt{3}/2 \end{bmatrix} \begin{bmatrix} Vcapu- \\ Vcapv- \\ Vcapw- \end{bmatrix} \quad \cdots(11)$$

Subtractor 523 calculates a difference between a value (first representative value) Vcap_av* comparable to the average value of all capacitor voltages outputted from all-voltage control unit 200 and control value Vcapa generated by three-phase/two-phase converter 520. Controller 521 generates a phase balancing circulating current command value Iza* by performing feedback computation to set this difference to zero, that is, to have control value Vcapa follow value (first representative value) Vcap_av* comparable to the average value of all capacitor voltages.

Similarly, subtractor 524 calculates a difference between value (first representative value) Vcap_av* comparable to the average value of all capacitor voltages outputted from all-voltage control unit 200 and control value Vcapb generated by three-phase/two-phase converter 520. Controller 522 generates a phase balancing circulating current command value Izb* by performing feedback computation to set this difference to zero, that is, to have control value Vcapb follow value (first representative value) Vcap_av* comparable to the average value of all capacitor voltages. Controllers 521 and 522 may each be a PI controller or another controller.

Adder 525 adds phase balancing circulating current command value Iza* generated by controller 521 and positive/negative balancing circulating current command value Izpna* generated by positive/negative balance control unit 600. Adder 526 adds phase balancing circulating current command value Izb* generated by controller 521 and positive/negative balancing circulating current command value Izpnb* generated by positive/negative balance control unit 600.

On the other hand, circulating current computing unit 550 receives input of detection values of arm currents Ipu, Inu, Ipv, Inv, Ipw, and Inw detected by arm current detector 13 and a detection value of DC current Idc detected by DC current detector 111. Circulating current computing unit 550 uses these values to compute circulating currents Izuc, Izvc, and Izwc of the U phase, the V phase, and the W phase in accordance with the expressions (7B), (8C), and (8D) described previously.

Three-phase/two-phase converter 560 generates control values Iza and Izb by subjecting circulating currents Izuc, Izvc, and Izwc calculated by circulating current computing unit 550 to three-phase/two-phase conversion in accordance with an expression (12) below.
[Math. 12]

$$\begin{bmatrix} \text{Iza} \\ \text{Izb} \end{bmatrix} = \begin{bmatrix} 1 & -1/2 & -1/2 \\ 0 & \sqrt{3}/2 & -\sqrt{3}/2 \end{bmatrix} \begin{bmatrix} \text{Izuc} \\ \text{Izvc} \\ \text{Izwc} \end{bmatrix} \qquad \cdots (12)$$

Subtractor 527 computes a difference between a result of addition of phase balancing circulating current command value Iza* and positive/negative balancing circulating current command value Izpna* by adder 525 described previously and control value Iza generated by three-phase/two-phase converter 560. Controller 531 performs feedback computation to set this difference to zero, that is, to have control value Iza follow the sum of circulating current command values Iza* and Izpna*.

Similarly, subtractor 528 computes a difference between a result of addition of phase balancing circulating current command value Izb* and positive/negative balancing circulating current command value Izpnb* by adder 525 described previously and control value Izb generated by three-phase/two-phase converter 560. Controller 532 performs feedback computation to set this difference to zero, that is, to have control value Izb follow the sum of circulating current command values Izb* and Izpnb*. Controllers 531 and 532 may each be a PI controller or another controller.

Two-phase/three-phase converter 540 generates voltage command values VzU*, VzV*, and VzW* of the U phase, the V phase, and the W phase for circulating current control by two-phase/three-phase conversion of operation amounts 531a and 531b outputted from controllers 531 and 532, respectively. Two-phase/three-phase converter 540 is inverse conversion of three-phase/two-phase converters 520 and 560. When voltage command values VzU*, VzV*, and VzW* are collectively referred to, denotation as voltage command value Vz* as shown in Fig. 12 is given. Generated voltage command value Vz* for the circulating current is outputted to voltage command value computing unit 700.

(Detailed Description of Positive/Negative Balance Control Unit 600)

Fig. 16 is a block diagram showing an exemplary configuration of positive/negative balance control unit 600 in Fig. 12. As shown in Fig. 16, positive/negative balance control unit 600 includes a third representative value computing unit 610, subtractors 611 to 613, constant multipliers 614 to 616, filters 621 to 623, controllers 631 to 633, multipliers 651 to 653, a three-phase/two-phase converter 660, an adder 665, a constant multiplier 670, subtractors 671 to 673, and controllers 681 to 683.

Operations by the constituent elements will be described below. Generation of circulating current command value Izpn* (Izpna* and Izpnb) for positive/negative balance control between capacitor voltage Vcap of positive-side arm 109p and capacitor voltage Vcap of negative-side arm 109n will initially be described below.

Referring to Fig. 16, third representative value computing unit 610 receives input of detection values of capacitor voltage values Vcap of all converter cells 110. Third representative value computing unit 610 computes based on these inputs, values (Vcapup_av, Vcapun_av, Vcapvp_av, Vcapvn_av, Vcapwp_av, and Vcapwn_av) comparable to average values of capacitor voltages Vcap of all converter cells 110 for each arm 109.

Subtractor 611 computes a difference between a value Vcapup_av comparable to the average value of capacitor voltages of U-phase positive-side arm 109pu and a value Vcapun_av comparable to the average value of capacitor voltages of U-phase negative-side arm 109nu. Constant multiplier 614 multiplies this difference value by 1/2. The value comparable to the average value of capacitor voltages of each arm 109 includes frequency oscillation identical to the system frequency and frequency oscillation twice as high as the system frequency. Filter 621 removes these frequency oscillations from a result of multiplication by constant multiplier 614. Controller 631 performs feedback computation on a value that has passed through filter 621 so as to bring the difference between values Vcapup_av and Vcapun_av comparable to the average values to zero.

Similarly, subtractor 612 computes a difference between a value Vcapvp_av comparable to the average value of capacitor voltages of V-phase positive-side arm 109pv and a value Vcapvn_av comparable to the average value of capacitor voltages of V-phase negative-side arm 109nv. Constant multiplier 615 multiplies this difference value by 1/2. The value comparable to the average value of capacitor voltages of each arm 109 includes frequency oscillation identical to the system frequency and frequency oscillation twice as high as the system frequency. Filter 622 removes these frequency oscillations from a result of multiplication by constant multiplier 615. Controller 632 performs feedback computation on a value that has passed through filter 622 so as to bring the difference between values Vcapvp_av and Vcapvn_av comparable to the average values to zero.

Subtractor 613 computes a difference between a value Vcapwp_av comparable to the average value of capacitor voltages of W-phase positive-side arm 109pw and a value Vcapwn_av comparable to the average value of capacitor voltages of W-phase negative-side arm 109nw. Constant multiplier 616 multiplies this difference value by 1/2. The value comparable to the average value of capacitor voltages of each arm 109 includes frequency oscillation identical to the system frequency and frequency oscillation twice as high as the system frequency. Filter 623 removes these frequency oscillations from a result of multiplication by constant multiplier 616. Controller 633 performs feedback computation on a value that has passed through filter 623 so as to bring the difference between values Vcapwp_av and Vcapwn_av comparable to the average values to zero.

For example, a moving average filter adapted to a frequency identical to the system frequency or a notch filter adapted to a frequency identical to the system frequency and a notch filter adapted to a frequency twice as high as the system frequency may be employed as filters 621 to 623. For example, a PI controller or another controller may be employed as controllers 631 to 633.

In order to eliminate imbalance in capacitor voltage Vcap between positive-side arm 109p and negative-side arm 109n, directions of electric power that flows into capacitor 7 (that is, a direction of charging and discharging of the current) should be reverse between positive-side arm 109p and negative-side arm 109n. With attention being paid to the fact that the AC voltage inputted to and outputted from power converter 101 are reverse in polarity between positive-side arm 109p and negative-side arm 109n, in order to charge the capacitor in one of positive-side arm 109p and negative-side arm 109n and to discharge the capacitor in the other thereof, the AC current having a 1f (fundamental wave) component identical in polarity should flow through positive-side arm 109p and negative-side arm 109n.

Output values from controllers 631 to 633 described previously represent magnitude of the AC current necessary for balancing of capacitor voltage Vcap between positive-side arm 109p and negative-side arm 109n of each of the U phase, the V phase, and the W phase.

Multiplier 651 calculates the AC current of a U-phase fundamental wave component by multiplying the output value from controller 631 by a unit sinusoidal wave Vuunit having magnitude 1 in phase with U-phase AC voltage Vu. Multiplier 652 calculates the AC current of a V-phase fundamental wave component by multiplying the output value from controller 632 by a unit sinusoidal wave Vvunit having magnitude 1 in phase with V-phase AC voltage Vv. Multiplier 653 calculates the AC current of a W-phase fundamental wave component by multiplying the output value from controller 633 by a unit sinusoidal wave Vwunit having magnitude 1 in phase with W-phase AC voltage Vw.

Three-phase/two-phase converter 660 generates positive/negative balancing circulating current command values Izpna* and Izpnb* (which are denoted as Izpn* when they are collectively referred to) by subjecting results of multiplication by multipliers 651 to 653 to three-phase/two-phase conversion. Three-phase/two-phase converter 660 outputs generated positive/negative balancing circulating current command value Izpn* to phase balance control unit 500. A transformation matrix for three-phase/two-phase conversion is the same as described in the expression (12) described previously.

Generation of positive/negative balance control AC voltage command values VpnU*, VpnV*, and VpnW* (which are denoted as an AC voltage command value Vpn* when they are collectively referred to) of the U phase, the V phase, and the W phase will now be described.

Adder 665 initially adds values that have passed through filters 621 to 623. Constant multiplier 670 multiplies a result of addition by adder 665 by 1/3. A neutral point voltage V0 is thus calculated.

Subtractor 671 then calculates a difference between the value that has passed through filter 621 and neutral point voltage V0. Controller 681 generates a positive/negative balancing U-phase AC voltage command value VpnU* by performing feedback computation to set this difference to zero.

Similarly, subtractor 672 calculates a difference between the value that has passed through filter 622 and neutral point voltage V0. Controller 682 generates a positive/negative balancing V-phase AC voltage command value VpnV* by performing feedback computation to set this difference to zero.

Subtractor 673 calculates a difference between the value that has passed through filter 623 and neutral point voltage V0. Controller 683 generates a positive/negative balancing W-phase AC voltage command value VpnW* by performing feedback computation to set this difference to zero.

Generated AC voltage command value Vpn* (VpnU*, VpnV*, and VpnW*) of each phase is outputted to voltage command value computing unit 700 in Fig. 12. For example, a PI controller or another controller may be employed as controllers 681 to 683.

As set forth above, positive/negative balance control unit 600 outputs a DC component of each phase as circulating current command value Izpn* (Izpna* and Izpnb*) and outputs an AC component of each phase as AC voltage command value Vpn* (VpnU*, VpnV*, and VpnW*).

(Detailed Description of Voltage Command Value Computing Unit 700)

As described with reference to Fig. 12, voltage command value computing unit 700 receives input of predetermined DC voltage command value Vdcc*, voltage command value Vac* (Vacu*, Vacv*, and Vacw*) outputted from current control unit 300, circulating current control voltage command value Vz* (VzU*, VzV*, and VzW*) outputted from phase balance control unit 500, and positive/negative balancing voltage command value Vpn* (VpnU*, VpnV*, and VpnW*) outputted from positive/negative balance control unit 600. DC voltage command value Vdcc* is a voltage command value corresponding to 1/2 time as high as voltage Vdc across DC terminals.

Voltage command value computing unit 700 generates voltage command value Vref for each arm 109 by allocating these voltage command values. Specifically, voltage command value computing unit 700 computes voltage command value Vrefpu for U-phase positive-side arm 109pu, voltage command value Vrefpv for V-phase positive-side arm 109pv, voltage command value Vrefpw for W-phase positive-side arm 109pw, voltage command value Vrefnu for U-phase negative-side arm 109nu, voltage command value Vrefnv for V-phase negative-side arm 109nv, and voltage command value Vrefnw for W-phase negative-side arm 109nw in accordance with an expression (13) below.

[Math. 13]

$$
\begin{aligned}
Vrefpu &= Vdcc* + VzU* - Vacu* - VpnU* \\
Vrefpv &= Vdcc* + VzV* - Vacv* - VpnV* \\
Vrefpw &= Vdcc* + VzW* - Vacw* - VpnW* \\
Vrefnu &= Vdcc* + VzU* + Vacu* + VpnU* \\
Vrefnv &= Vdcc* + VzV* + Vacv* + VpnV* \\
Vrefnw &= Vdcc* + VzW* + Vacw* + VpnW*
\end{aligned}
\qquad \cdots(13)
$$

Furthermore, voltage command value computing unit 700 receives from all-voltage control unit 200, input of total value Vcappu of the capacitor voltages of U-phase positive-side arm 109pu, total value Vcappv of the capacitor voltages of V-phase positive-side arm 109pv, total value Vcappw of the capacitor voltages of W-phase positive-side arm 109pw, total value Vcapnu of the capacitor voltages of U-phase negative-side arm 109nu, total value Vcapnv of the capacitor voltages of V-phase negative-side arm 109nv, and total value Vcapnw of the capacitor voltages of W-phase negative-side arm 109nw.

Voltage command value computing unit 700 generates an arm modulation command value Krefpu for the U-phase positive-side arm by dividing voltage command value Vrefpu for the U-phase positive-side arm by total value Vcappu of the capacitor voltages of this arm. Similarly, voltage command value computing unit 700 generates an arm modulation command value Krefpv for the V-phase positive-side arm by dividing voltage command value Vrefpv for the V-phase positive-side arm by total value Vcappv of the capacitor voltages of this arm. Voltage command value computing unit 700 generates an arm modulation command value Krefpw for the W-phase positive-side arm by dividing voltage command value Vrefpw for the W-phase positive-side arm by total value Vcappw of the capacitor voltages of this arm.

Voltage command value computing unit 700 generates an arm modulation command value Krefnu for the U-phase negative-side arm by dividing voltage command value Vrefnu for the U-phase negative-side arm by total value Vcapnu of the capacitor voltages of this arm. Similarly, voltage command value computing unit 700 generates an arm modulation command value Krefnv for the V-phase negative-side arm by dividing voltage command value Vrefnv for the V-phase negative-side arm by total value Vcapnv of the capacitor voltages of this arm. Voltage command value computing unit 700 generates an arm modulation command value Krefnw for the W-phase negative-side arm by dividing voltage command value Vrefnw for the W-phase negative-side arm by total value Vcapnw of the capacitor voltages of this arm. When the arm modulation command values for arms 109 are collectively referred to or when an arm modulation command value for any arm 109 is referred to, denotation as arm modulation command value Kref is given.

Voltage command value computing unit 700 outputs arm modulation command value Kref for each arm 109 to N gate signal generators 900 corresponding to N respective converter cells 110 included in arm 109.

Each gate signal generator 900 outputs gate signal Ga for control of on and off of semiconductor switching element 8 provided in corresponding converter cell 110, based on arm modulation command value Kref. For example, each gate signal generator 900 generates gate signal Ga with which on and off of semiconductor switching element 8 in corresponding converter cell 110 is controlled under pulse width modulation (PWM) control based on comparison between arm modulation command value Kref and carrier waves.

(Effect of Third Embodiment)

As described above, in the third embodiment, in the three-phase Y-connected MMC converter that performs bidirectional conversion between DC power and AC power, reverse-phase voltage compensator 21 activates reverse-phase voltage control in the steady state and deactivates reverse-phase voltage control on the occurrence of a system fault as in the first and second embodiments. Imbalance among phases of the capacitor voltages of the three-phase Y-connected MMC converter can thus be prevented and then the system voltage can be stabilized.

It should be understood that the embodiments disclosed herein are illustrative and non-restrictive in every respect. The scope of this application is defined by the terms of the claims rather than the description above and is intended to include any modifications within the scope and meaning equivalent to the terms of the claims.

REFERENCE SIGNS LIST

1, 100 power conversion device; 2, 101 power converter; 3, 107 control device; 4 interconnected transformer; 5 reactor; 6, 110 converter cell; 7 power storage element; 8 semiconductor switching element; 9 rectification element; 11 voltage detector; 12 AC power system; 13 arm current detector; 14 AC current detector (output current detector); 15 AC voltage detector; 20 PLL unit; 21, 21A reverse-phase voltage compensator; 22, 500 balance control unit; 23 output current control unit; 24 circulating current control unit; 25, 700 voltage command value computing unit; 26, 900 gate signal generator; 27 second generator; 30 positive-phase coordinate transformation unit; 31 reverse-phase coordinate transformation unit; 32 to 35, 71, 72, 511 to 513, 621 to 623 filter; 36, 37, 96 comparator; 38 AND circuit; 39 on delay circuit; 44, 45, 58 to 60, 85, 92, 93, 220, 320, 330, 521, 522, 531, 532, 631 to 633, 681 to 683 controller; 46, 70 coordinate transformation unit; 50 arm current command value generator; 51 voltage computing unit; 64 reverse-phase current command value generator; 95 maximum value computer; 106N, 106P DC line; 108 leg circuit; 109, A1, A2, A3 arm; 111 DC current detector; 112n, 112p DC voltage detector; 200 all-voltage control unit; 210 first representative value computing unit; 300 current control unit; 310, 520, 560, 660 three-phase/two-phase converter; 350, 540 two-phase/three-phase converter; 510 second representative value computing unit; 550 circulating current computing unit; 600 positive/negative balance control unit; 610 third representative value computing unit.

**Claims**

1.  A power conversion device connected to an AC power system, the power conversion device comprising:

    a power converter comprising a plurality of arms; and
    a control device to control the power converter, wherein
    each arm comprises a plurality of cascaded converter cells,
    each of the converter cells comprises:

      a pair of input and output terminals;
      a plurality of semiconductor switching elements; and
      a power storage element connected to the pair of input and output terminals with the plurality of semiconductor switching elements being interposed,

    the control device comprises:

      a first generator to generate a first voltage command value based on a positive-phase current command value and an inputted reverse-phase current command value for control of an AC current outputted from the power converter;
      a second generator to generate a second voltage command value for suppression of imbalance of voltages of power storage elements among the plurality of arms;
      a gate signal generator to generate a gate signal for control of on and off of the plurality of semiconductor switching elements in each converter cell based on the first voltage command value and the second voltage command value; and
      a reverse-phase voltage compensator to generate the reverse-phase current command value to compensate for a reverse-phase component contained in an AC voltage of the AC power system and to output the reverse-phase current command value to the first generator when reverse-phase voltage compensation is performed, and

when a state in which imbalance of the AC voltage of the AC power system is determined as being minor based on comparison of an assessment value relating to a degree of the imbalance with a threshold value continues for a certain time period or longer, the reverse-phase voltage compensator performs the reverse-phase voltage compensation.

2. The power conversion device according to claim 1, wherein
the reverse-phase voltage compensator calculates magnitude of a positive-phase voltage and magnitude of a reverse-phase voltage from the AC voltage of the AC power system as the assessment value, and when a state in which magnitude of the positive-phase voltage is equal to or larger than a first threshold value and magnitude of the reverse-phase voltage is smaller than a second threshold value continues for a certain time period or longer, the reverse-phase voltage compensator performs the reverse-phase voltage compensation.

3. The power conversion device according to claim 2, wherein
when magnitude of the positive-phase voltage is smaller than the first threshold value or magnitude of the reverse-phase voltage is equal to or larger than the second threshold value, the reverse-phase voltage compensator does not perform the reverse-phase voltage compensation.

4. The power conversion device according to claim 1, wherein
the reverse-phase voltage compensator calculates a maximum value of an absolute value of a difference between a representative value of the power storage element in the entire power converter and a representative value of the power storage element for each of the arms as the assessment value, and when a state in which the maximum value of the absolute value of the difference is smaller than a third threshold value continues for a certain time period or longer, the reverse-phase voltage compensator performs the reverse-phase voltage compensation.

5. The power conversion device according to claim 4, wherein
when the maximum value of the absolute value of the difference is equal to or larger than the third threshold value, the reverse-phase voltage compensator does not perform the reverse-phase voltage compensation.

6. The power conversion device according to any one of claims 1 to 5, wherein
the reverse-phase voltage compensator calculates the reverse-phase voltage on a reverse-phase coordinate from a detection value of the AC voltage of the AC power system and generates a reverse-phase current command value on the reverse-phase coordinate by performing feedback computation to set a difference between the reverse-phase voltage and the reverse-phase voltage command value to zero, and generates the reverse-phase current command value to be outputted to the first generator by converting the reverse-phase current command value on the reverse-phase coordinate into a value on a positive-phase coordinate.

7. The power conversion device according to any one of claims 1 to 6, wherein

the AC power system is a three-phase AC power system having a first phase, a second phase, and a third phase,
the power converter has a first arm, a second arm, and a third arm as the plurality of arms,
the first arm is connected between the first phase and the second phase of the AC power system,
the second arm is connected between the second phase and the third phase of the AC power system, and
the third arm is connected between the third phase and the first phase of the AC power system.

8. The power conversion device according to any one of claims 1 to 6, wherein

the AC power system is a three-phase AC power system having a first phase, a second phase, and a third phase,
the power converter has a first arm, a second arm, and a third arm as the plurality of arms,
the first arm is connected between the first phase of the AC power system and a neutral point,
the second arm is connected between the second phase of the AC power system and the neutral point, and
the third arm is connected between the third phase of the AC power system and the neutral point.

9. The power conversion device according to any one of claims 1 to 6, wherein

the AC power system is a three-phase AC power system having a first phase, a second phase, and a third phase,
the power converter is connected between DC lines on a positive electrode side and a negative electrode side and the AC power system and has a first arm, a second arm, a third arm, a fourth arm, a fifth arm, and a sixth arm as the plurality of arms,

the first arm is connected between the first phase of the AC power system and a DC line on the positive electrode side,

the second arm is connected between the second phase of the AC power system and the DC line on the positive electrode side,

the third arm is connected between the third phase of the AC power system and the DC line on the positive electrode side,

the fourth arm is connected between the first phase of the AC power system and a DC line on the negative electrode side,

the fifth arm is connected between the second phase of the AC power system and the DC line on the negative electrode side, and

the sixth arm is connected between the third phase of the AC power system and the DC line on the negative electrode side.

FIG.1

FIG.2

6 (110)

10H

8p
9p
P1
7
VOLTAGE DETECTOR
11
Vcap
8n
9n
7p
7n
P2

FIG.3

6 (110)

FIG.4

EP 4 580 032 A1

FIG.5

EP 4 580 032 A1

SYSTEM VOLTAGE

Vu
Vv
Vw

30 POSITIVE-PHASE COORDINATE TRANSFORMATION (uvw/ POSITIVE-PHASE dq)

$\theta$

Vdp — 32 filter — 36 COMPARATOR $\geq$ Vth1:1 $<$ Vth1:0

Vqp — 33 filter

Vdn — 34 filter — 37 COMPARATOR $\geq$ Vth2:0 $<$ Vth2:1

Vqn — 35 filter

38 — 39 ON Delay — NegAvrOn

21

31 REVERSE-PHASE COORDINATE TRANSFORMATION (uvw/ REVERSE-PHASE dq)

$-\theta$

REVERSE-PHASE VOLTAGE COMMAND Vdn* — 40 + − — 42 — 44 CONTROLLER — Idn1

REVERSE-PHASE VOLTAGE Vdn

REVERSE-PHASE VOLTAGE COMMAND Vqn* — 41 + − — 43 — 45 CONTROLLER — Iqn1

REVERSE-PHASE VOLTAGE Vqn

46 COORDINATE TRANSFORMATION (REVERSE-PHASE dq/ POSITIVE-PHASE dq)

$2\theta$

Idnavr* (REVERSE-PHASE REACTIVE CURRENT COMMAND)

Iqnavr* (REVERSE-PHASE ACTIVE CURRENT COMMAND)

FIG.6

EP 4 580 032 A1

FIG.7

FIG.8

POSITIVE-PHASE REACTIVE
CURRENT COMMAND Idref

PHASE
BALANCE
CONTROL
UNIT — 22

Idn*
(PHASE-BALANCING REVERSE-PHASE
REACTIVE CURRENT COMMAND)

Iqn*
(PHASE-BALANCING REVERSE-PHASE
ACTIVE CURRENT COMMAND)

REVERSE-
PHASE
VOLTAGE
COMPENSATOR — 21

Idnavr*
(REVERSE-PHASE VOLTAGE
COMPENSATION REVERSE-PHASE
REACTIVE CURRENT COMMAND)

Iqnavr*
(REVERSE-PHASE VOLTAGE
COMPENSATION REVERSE-PHASE
ACTIVE CURRENT COMMAND)

POSITIVE-PHASE ACTIVE
CURRENT COMMAND Iqref

88  REACTIVE
CURRENT
COMMAND Id*

90

CONTROLLER — 92

REACTIVE CURRENT
CONTROL OUTPUT
VOLTAGE COMMAND Vd*

REACTIVE
CURRENT Id

— 23

ACTIVE
CURRENT Iq

89  ACTIVE CURRENT
COMMAND Iq*

91

CONTROLLER — 93

ACTIVE CURRENT
CONTROL OUTPUT
VOLTAGE COMMAND Vq*

FIG.9

FIG.10

FIG.11

# FIG.12

FIG.13

FIG.14

# FIG.15

EP 4 580 032 A1

FIG.16

EP 4 580 032 A1

## INTERNATIONAL SEARCH REPORT

| International application No. |
| --- |
| **PCT/JP2022/031724** |

| A. | CLASSIFICATION OF SUBJECT MATTER |
| --- | --- |

*H02M 7/49*(2007.01)i; *H02M 7/48*(2007.01)i
FI:   H02M7/49; H02M7/48 R

According to International Patent Classification (IPC) or to both national classification and IPC

| B. | FIELDS SEARCHED |
| --- | --- |

Minimum documentation searched (classification system followed by classification symbols)

      H02M7/49; H02M7/48

Documentation searched other than minimum documentation to the extent that such documents are included in the fields searched

      Published examined utility model applications of Japan 1922-1996
      Published unexamined utility model applications of Japan 1971-2022
      Registered utility model specifications of Japan 1996-2022
      Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-151076 A (FUJI ELECTRIC COMPANY, LIMITED) 27 September 2021 (2021-09-27)<br>    entire text, all drawings | 1-9 |
| A | JP 2013-005694 A (CENTRAL RESEARCH INSTITUTE OF ELECTRIC POWER INDUSTRY) 07 January 2013 (2013-01-07)<br>    entire text, all drawings | 1-9 |
| A | JP 2017-163765 A (FUJI ELECTRIC COMPANY, LIMITED) 14 September 2017 (2017-09-14)<br>    entire text, all drawings | 1-9 |
| A | JP 2020-178425 A (FUJI ELECTRIC COMPANY, LIMITED) 29 October 2020 (2020-10-29)<br>    entire text, all drawings | 1-9 |
| A | JP 6-113466 A (CHUBU ELECTRIC POWER CO., INCORPORATED) 22 April 1994 (1994-04-22)<br>    entire text, all drawings | 1-9 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 580 032 A1

## INTERNATIONAL SEARCH REPORT

International application No.

**PCT/JP2022/031724**

### C. DOCUMENTS CONSIDERED TO BE RELEVANT

| Category* | Citation of document, with indication, where appropriate, of the relevant passages | Relevant to claim No. |
|---|---|---|
| A | WO 2014/162620 A1 (MITSUBISHI ELECTRIC CORPORATION) 09 October 2014 (2014-10-09)<br>entire text, all drawings | 1-9 |
| A | CN 113098052 A (TSINGHUA UNIVERSITY) 09 July 2021 (2021-07-09)<br>entire text, all drawings | 1-9 |

Form PCT/ISA/210 (second sheet) (January 2015)

40

## INTERNATIONAL SEARCH REPORT
### Information on patent family members

International application No.

**PCT/JP2022/031724**

| Patent document cited in search report | | | Publication date (day/month/year) | Patent family member(s) | | | Publication date (day/month/year) |
|---|---|---|---|---|---|---|---|
| JP | 2021-151076 | A | 27 September 2021 | CN | 113497562 | A | |
| JP | 2013-005694 | A | 07 January 2013 | (Family: none) | | | |
| JP | 2017-163765 | A | 14 September 2017 | (Family: none) | | | |
| JP | 2020-178425 | A | 29 October 2020 | (Family: none) | | | |
| JP | 6-113466 | A | 22 April 1994 | (Family: none) | | | |
| WO | 2014/162620 | A1 | 09 October 2014 | US entire text, all drawings EP | 2016/0056727 2983284 | A1 A1 | |
| CN | 113098052 | A | 09 July 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014162620 A

- JP 6113466 A